(19) Europäisches Patentamt
European Patent Office
Office européen des brevets

(11) Veröffentlichungsnummer: **0 445 274 B1**

# (12) EUROPÄISCHE PATENTSCHRIFT

(45) Veröffentlichungstag der Patentschrift: **18.01.95**

(51) Int. Cl.⁶: **C09K 19/30**, G02F 1/137

(21) Anmeldenummer: **90914700.1**

(22) Anmeldetag: **18.08.90**

(86) Internationale Anmeldenummer: **PCT/EP90/01359**

(87) Internationale Veröffentlichungsnummer: **WO 91/02779 (07.03.91 91/06)**

## (54) FLÜSSIGKRISTALLINES MEDIUM.

(30) Priorität: **26.08.89 EP 89115781**
**08.09.89 DE 3929958**

(43) Veröffentlichungstag der Anmeldung:
**11.09.91 Patentblatt 91/37**

(45) Bekanntmachung des Hinweises auf die Patenterteilung:
**18.01.95 Patentblatt 95/03**

(84) Benannte Vertragsstaaten:
**DE GB NL**

(56) Entgegenhaltungen:
**EP-A- 0 084 974**
**EP-A- 0 125 563**
**EP-A- 0 133 489**
**EP-A- 0 205 998**
**EP-A- 0 256 636**
**EP-A- 0 365 962**
**WO-A-88/09360**
**WO-A-89/08689**
**DE-A- 3 410 733**

(73) Patentinhaber: **MERCK PATENT GmbH**
**Postfach,**
**Frankfurter Strasse 250**
**D-64271 Darmstadt (DE)**

(72) Erfinder: **COATES, David**
**87 Sopwith Crescent**
**Merley**
**Wimborne**
**Dorset BH21 3SW (GB)**
Erfinder: **GREENFIELD, Simon**
**2 Blackbird Close**
**Creekmoor**
**Poole BH17 7YA (GB)**
Erfinder: **SCHEUBLE, Bernhard**
**Grundweg 3**
**D-6104 Seeheim-Jugenheim (DE)**
Erfinder: **WÄCHTLER, Andreas**
**Goethestrasse 34**
**D-6103 Griesheim (DE)**
Erfinder: **HITTICH, Reinhard**
**Am Kirchberg 11**
**D-6101 Modautal 1 (DE)**
Erfinder: **RIEGER, Bernhard Wacore-Tamaga-wagakuen**
**2834, Ootadaira, Nara-machi**
**Midori-ku**
**Yokohama-shi**
**Kanagawa Pref. 227 (JP)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 445 274 B1

Erfinder: **PLACH, Herbert**
**Wingertsbergstrasse 5**
**D-6100 Darmstadt (DE)**
Erfinder: **BARTMANN, Ekkehard**
**Dieburger Weg 12a**
**D-6106 Erzhausen (DE)**

## Beschreibung

Die vorliegende Erfindung betrifft ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("super-birefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskositat aufweisen und in den Zellen kurze Ansprechzeiten, tiefe Schwellenspannungen und einen hohen Kontrast ergeben. Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität des Widerstands und geringem Dampfdruck erwünscht.

Matrix-Flüssigkristallanzeigen gemäß des Oberbegriffs sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:

1. MOS (Metal Oxide Semiconductor)-Transistoren auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Euro-display 84, Sept. 1984: Design of Thin Film Transistors for Matrix Addressing of Television Liquid Crystal Displays, p. 145 ff,

Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder UV-Belastung zeigt. Die MFK-Anzeigen aus dem Stand der Technik genügen nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, die diese Nachteile nicht oder nur in geringerem Maße zeigen.

Der Erfindung liegt die Aufgabe Zugrunde, Medien insbesondere für derartige MFK-Anzeigen bereitzustellen, die die oben angegebenen Nachteile nicht oder nur in geringerem Maße, gleichzeitig sehr hohe spezifische Widerstände und niedrige Schwellenspannungen aufweisen.

Es wurde nun gefunden, daß diese Aufgabe gelöst werden kann, wenn man in diesen MFK-Anzeigen erfindungsgemäße Medien verwendet.

Gegenstand der Erfindung ist somit ein flüssigkristallines Medium mit hohem spezifischem Widerstand auf der Basis eines Gemisches von polaren Verbindungen mit einer dielektrischen Anisotropie von über +1.5, dadurch gekennzeichnet, daß es eine oder mehrere Verbindungen ausgewählt aus der Gruppe der Verbindungen der Formeln Iae bis Iam, Ib und Ic enthält

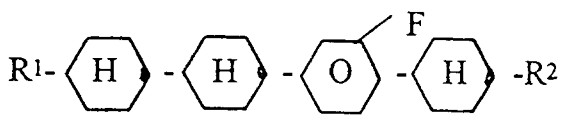

Iae

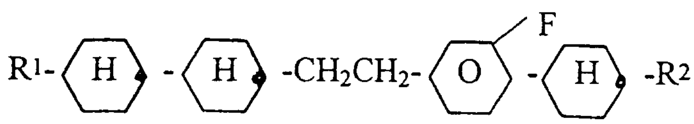

Iaf

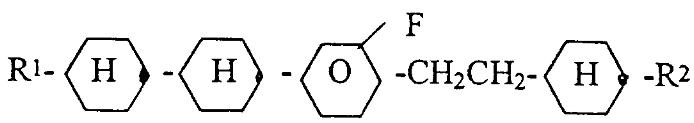

Iag

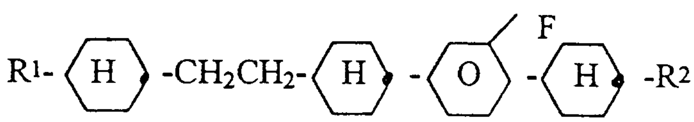

Iah

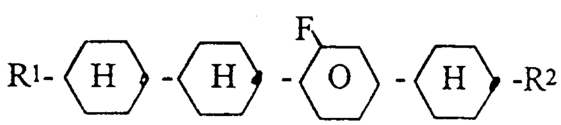

Iaj

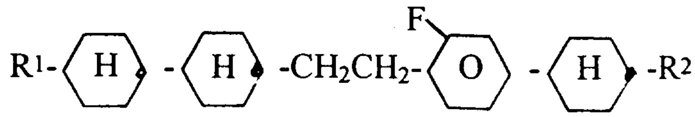

Iak

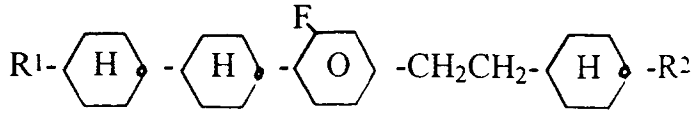

Ial

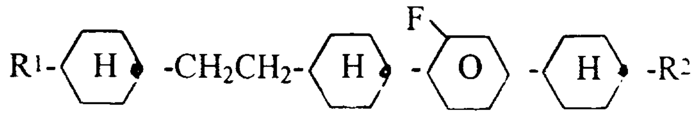

Iam

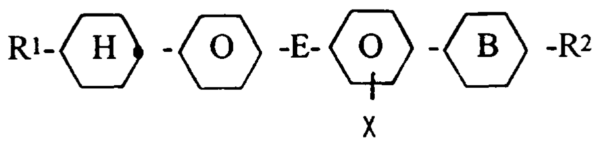

Ib

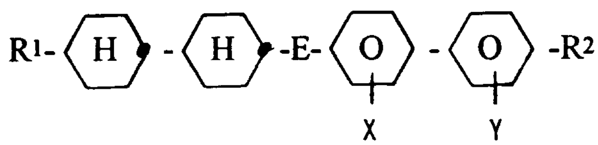

Ic

worin
die Reste E jeweils eine Einfachbindung oder einer der Reste E auch $-CH_2CH_2-$,
Ring B

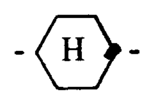

oder

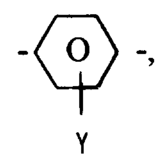

$R^1$ und $R^2$ jeweils unabhängig voneinander n-Alkyl, worin auch eine $CH_2$-Gruppe durch -O-, -CHHal-, $-CHal_2-$ oder -CH=CH- ersetzt sein kann und X und Y unabhängig H oder F bedeuten mit der Maßgabe, daß mindestens einer der und Molekül der Formel Ib und Ic vorhandenen Reste X und Y F bedeutet.

Gegenstand der Erfindung sind auch elektrooptische Anzeigen (insbesondere MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Änliche Medien mit Verbindungen ohne Fluorsubstitution sind aus EP-A-84 974 bekannt. EP-A-256 636 beschreibt ähnliche Verbindungen mit lateraler Substitution am Phenylkern jedoch im Gegensatz zu den Verbindungen der Formeln Iae bis Iam, Ib und Ic mit terminal polarer Substitution durch F, Cl oder $FC_3$.

In der WO-A-88/0936 werden ähnliche Medien beschrieben. Diese basieren jedoch auf nitrilhaltigen Komponenten und weisen für MFK-Anzeigen keinen ausreichen hohen spezifischen Widerstand auf.

Die erfindungsgemäßen Flüssigkristallmischungen ermöglichen es bei niedrigen Viskositäten gleichzeitig Schwellenspannungen vorzugsweise $\leqq$ 1,65 Volt, Klärpunkte oberhalb 60°, vorzugsweise oberhalb 65° und/oder einen hohen Wert für den spezifischen Widerstand zu erreichen, wodurch hervorragende MKF-Anzeigen erzielt werden können. Es versteht sich, daß durch geeignete Wahl der Komponenten der erfindungsgemäßen Mischungen auch höhere Klärpunkte (z.B. oberhalb 90°) bei höheren Schwellenspannung ($V_{th}$ < 2,2 Volt) unter Erhalt der anderen vorteilhaften Eigenschaften realisiert werden können. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie

z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Messungen des "Capacity Holding-ration" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel

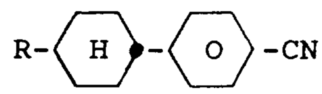

Auch die UV-Stabilität der erfindungegemäßen Mischungen ist erheblich besser, d. h. sie zeigen eine deutlich kleinere Abnahme des HR unter UV-Belastung.

Die Viskosität bei 20 °C ist vorzugsweise ≦ 25 mPa.s. Der nematische Phasenbereich ist vorzugsweise mindestens 70°, insbesondere mindestens 80°. Vorzugsweise erstreckt sich dieser Bereich mindestens von -20° bis +70°.

Die einzelnen Verbindungen der Formeln I bis XII und deren Unterformeln, die in den erfindungsgemäßen MFK-Anzeigen verwendet werden können, sind entweder bekannt, oder sie können analog zu den bekannten Verbindungen hergestellt werden.

Bevorzugte Ausführungsformen sind im folgenden angegeben:

- Medium enthält zusätzlich eine oder mehrere Verbindungen ausgewählt aus der Gruppe bestehend aus den allgemeinen Formeln II, III und IV:

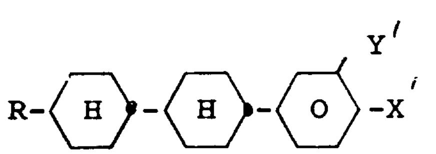

II

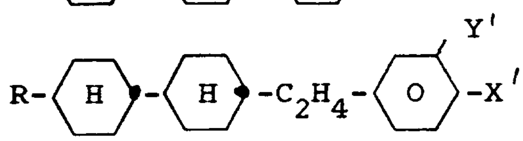

III

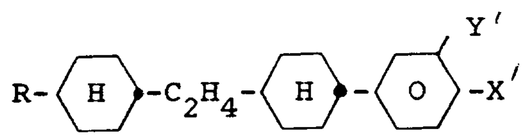

IV

  worin R, X' und Y' jeweils unabhängig voneinander eine der in Anspruch 2 angegebene Bedeutung haben.
- Medium enthält zusätzlich eine oder mehrere Verbindungen ausgewählt aus der Gruppe bestehend aus den allgemeinen Formeln V bis VIII:

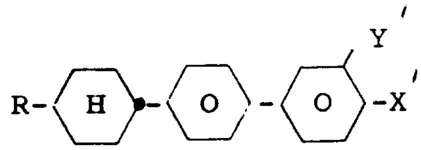

V

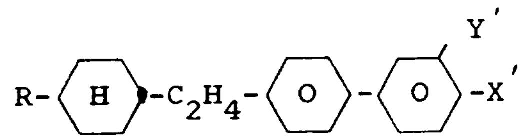

VI

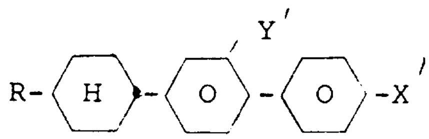

VII

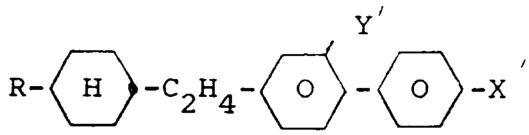

VIII

worin R, X' und Y' jeweils unabhängig voneinander eine der in Anspruch 2 angegebene Bedeutung haben.

- Medium enthält zusätzlich eine oder mehrere Verbindungen ausgewählt aus der Gruppe bestehend aus den allgemeinen Formeln IX bis XII:

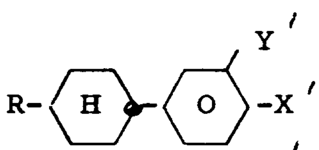

IX

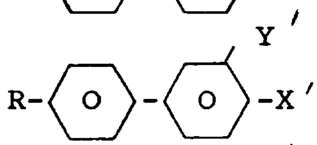

X

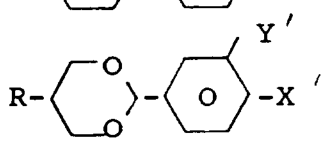

XI

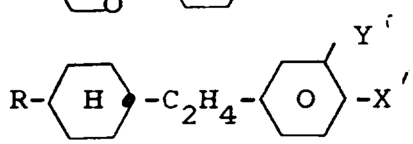

XII

worin R, X' und Y' jeweils unabhängig voneinander eine der in Anspruch 2 angegebene Bedeutung haben.

- Der Anteil an Verbindungen der Formeln II bis IV zusammen beträgt im Gesamtgemisch mindestens 50 Gew.-%
- der Anteil an Verbindungen der Formeln Ia, Ib und Ic beträgt im Gesamtgemisch mindestens 10 Gew.-%
- der Anteil an Verbindungen der Formeln II bis IV im Gesamtgemisch beträgt 50 bis 70 Gew.-%

- Y in Formel I ist H

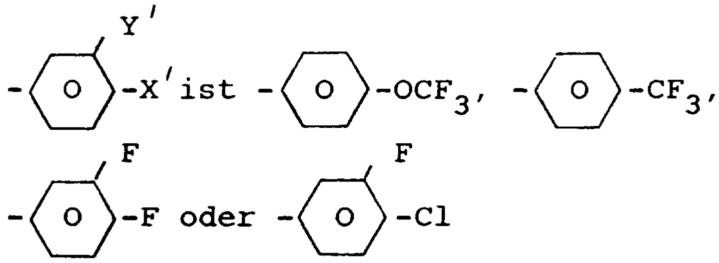

ist ... , ... oder ...

- das Medium enthält Verbindungen der Formeln II und III oder IV
- R ist geradkettiges Alkyl oder Alkenyl mit 2 bis 7 C-Atomen
- das Medium enthält weitere Verbindungen, vorzugsweise ausgewählt aus der folgenden Gruppe:

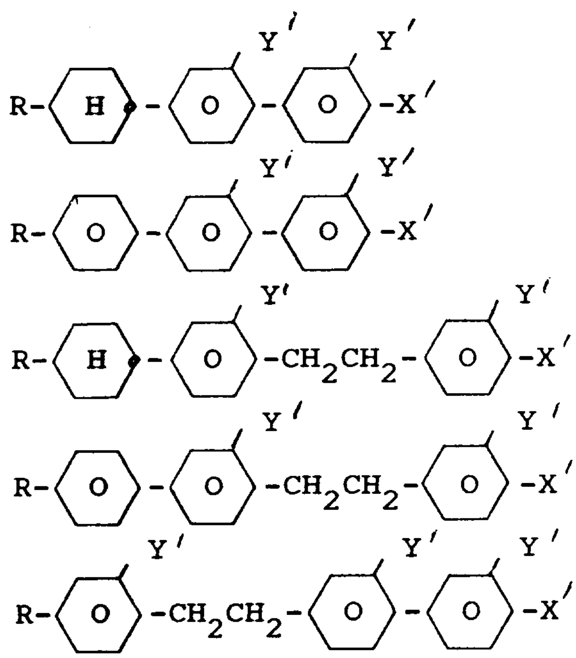

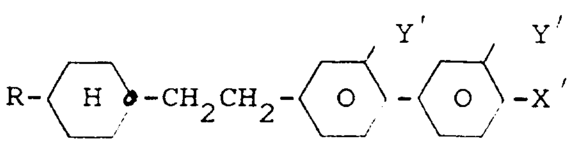

- Das Gewichtsverhältnis I: (II + III + IV) ist vorzugsweise 1 : 4 bis 1 : 1.
- Medium besteht im wesentlichen aus Verbindungen ausgewählt aus der Gruppe bestehend aus den allgemeinen Formeln I bis XII.

Es wurde gefunden, daß bereits ein relativ geringer Anteil an Verbindungen der Formel I insbesondere im Gemisch mit einer oder mehreren Verbindungen der Formel II, III und/oder IV zu einer beträchtlichen Verbreiterung der Mesophase führt, wobei gleichzeitig breite nematische Phasen mit tiefen Übergangstemperaturen smektisch-nematisch beobachtet werden. Die Verbindungen der Formeln I bis IV sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besondere Alkenylgruppen sind $C_2$-$C_7$-1E-Alkenyl, $C_4$-$C_7$-3E-Alkenyl, $C_5$-$C_7$-4-Alkenyl, $C_6$-$C_7$-5-Alkenyl und $C_7$-6-Alkenyl, insbesondere $C_2$-$C_7$-1E-Alkenyl, $C_4$-$C_7$-3E-Alkenyl und $C_5$-$C_7$-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel $C_nH_{2n+1}$-O-$(CH_2)_m$, worin n und m jeweils unabhängig voneinander 1 bis 6 bedeuten. Vorzugsweise ist n = 1 und m 1 bis 6.

Durch geeignete Wahl der Bedeutungen von R, X und Y können die Ansprechzeiten` die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten $k_{33}$ (bend) und $k_{11}$ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von $k_{33}/k_{11}$ im Vergleich zu Alkyl- und Alkoxyresten. Eine Gruppe $-CH_2CH_2-$ in $Z^1$ bzw. $Z^2$ führt im allgemeinen zu höheren Werte von $k_{33}/k_{11}$ im Vergleich zu einer einfachen Kovalenzbindung. Höhere Werte von $k_{33}/k_{11}$ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV hängt weitgehend von den gewünschten Eigenschaften, von der Wahl der Komponenten der Formeln I, II, III und/oder IV und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XII in den erfindungsgemaßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XII ist.

Die erfindungsgemäßen Medien können ferner eine Komponente A enthalten bestehend aus einer oder mehreren Verbindungen mit einer dielektrischen Anisotropie von -1,5 bis +1,5 der allgemeinen Formel I'

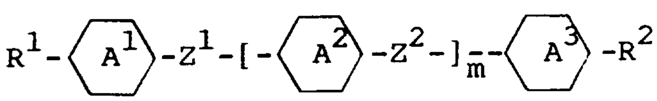

I'

worin

| | |
|---|---|
| $R^1$ und $R^2$ | jeweils unabhängig voneinander n-Alkyl, ω-Fluoralkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4-phenylen, trans-1,4-Cyclohexylen oder 1,4-Cyclohexenylen, |
| $Z^1$ und $Z^2$ | jeweils unabhängig voneinander $-CH_2CH_2-$oder eine Einfachbindung, |

und

m 0, 1 oder 2 bedeutet.

Komponente A enthält vorzugsweise eine oder mehrere Verbindungen ausgewählt aus der Gruppe bestehend aus II1 bis II7:

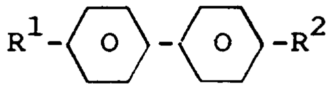

II1

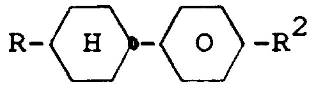

II2

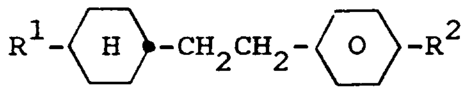

II3

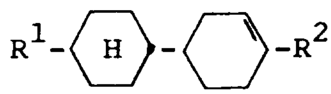

II4

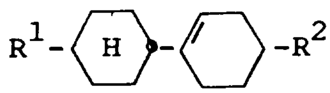

II5

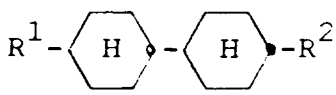

II6

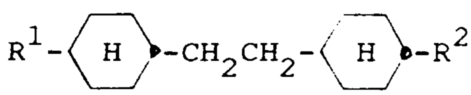

II7

worin $R^1$ und $R^2$ die bei Formel I' angegebene Bedeutung haben.

Vorzugsweise enthält Komponente A zusätzlich eine oder mehrere Verbindungen ausgewählt aus der Gruppe bestehend aus II8 bis II20:

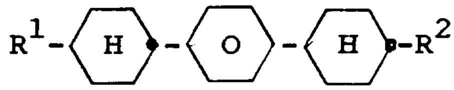 II8

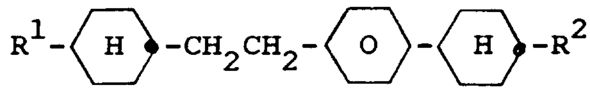 II9

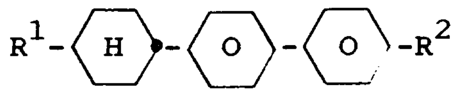 II10

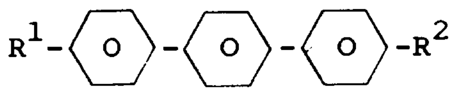 II11

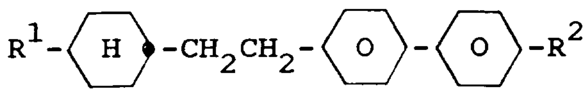 II12

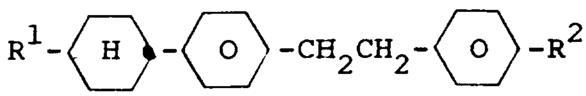 II13

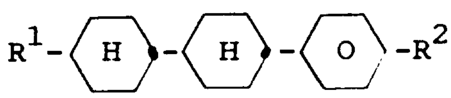 II14

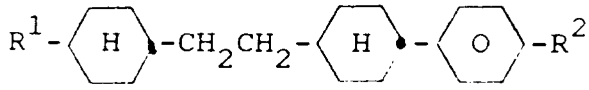 II15

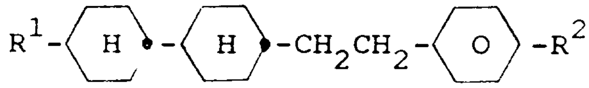 II16

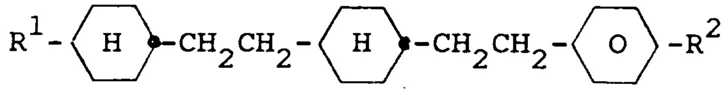 II17

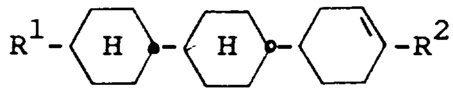 II18

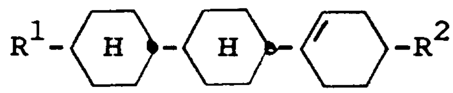 II19

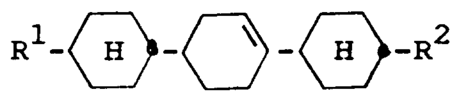 II20

worin $R^1$ und $R^2$ die bei Formel I' angegebene Bedeutung haben und die 1,4-Phenylengruppen in II8 bis II17 jeweils unabhängig voneinander auch durch Fluor ein- oder mehrfach substituiert sein können.

Ferner enthält Komponente A vorzugsweise zusätzlich eine oder mehrere Verbindungen ausgewählt aus der Gruppe bestehend aus II21 bis II25 enthält:

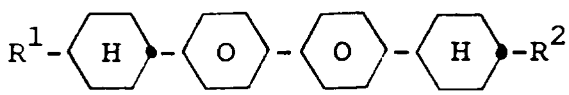 II21

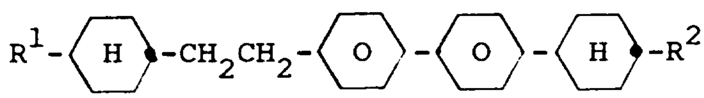 II22

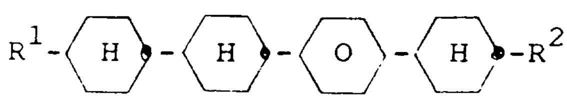 II23

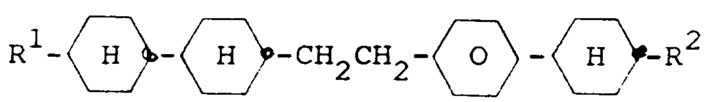 II24

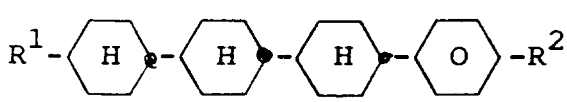 II25

worin $R^1$ und $R^2$ die bei Formel I' angegebene Bedeutung haben und die 1,4-Phenylengruppen in II21 bis II25 jeweils unabhängig voneinander auch durch Fluor ein- oder mehrfach substituiert sein können.

Schließlich sind derartige Mischungen bevorzugt, deren Komponente A eine oder mehrere Verbindungen ausgewählt aus der Gruppe bestehend aus II26 und II27 enthält:

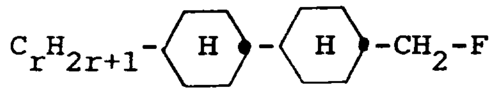

II26

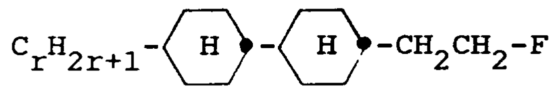

II27

worin $C_rH_{2r+1}$ eine geradkettige Alkylgruppe mit bis zu 7 C-Atomen ist.

In einigen Fällen erweist sich der Zusatz von Verbindungen der Formel

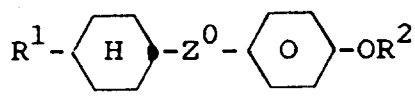

worin

$R^1$ und $R^2$ die bei Formel I' angegebene Bedeutung haben

und

$Z^0$ eine Einfachbindung, $-CH_2CH_2-$,

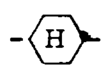 oder 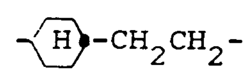

bedeutet,

zur Unterdrückung smektischer Phasen als vorteilhaft, obwohl hierdurch der spezifische Widerstand erniedrigt werden kann. Zur Erzielung von für die Anwendung optimaler Parameterkombinationen kann der Fachmann leicht feststellen, ob und falls ja in welcher Menge diese Verbindungen zugesetzt sein können. Normalerweise werden weniger als 15 %, insbesondere 5-10 % verwendet.

Ferner bevorzugt sind Flüssigkristallmischungen, die eine oder mehrere Verbindungen ausgewählt aus der Gruppe bestehend aus III' und IV' enthalten:

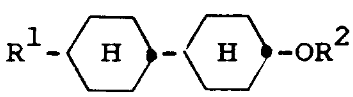

III'

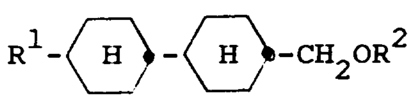

IV'

worin $R^1$ und $R^2$ die bei Formel I' angegebene Bedeutung haben.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es

ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die erfindungsgemäßen Medien enthalten vorzugsweise

a) mindestens 10 Gew.% einer flüssigkristallinen Komponente B bestehend aus einer oder mehreren Verbindungen mit einer dielektrischen Anisotropie von über +1,5,

b) bis zu 90 Gew.% einer flüssigkristallinen Komponente A bestehend aus einer oder mehreren Verbindungen mit einer dielektrischen Anisotropie von -1,5 bis +1,5 der allgemeinen Formel I

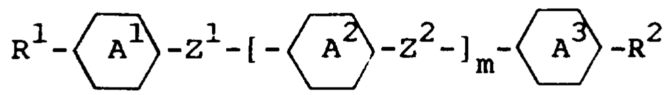

I

worin

| | |
|---|---|
| $R^1$ und $R^2$ | jeweils unabhängig voneinander n-Alkyl, ω-Fluoralkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4-phenylen, trans-1,4-Cyclohexylen oder 1,4-Cyclohexenylen, |
| $Z^1$ und $Z^2$ | jeweils unabhängig voneinander $-CH_2CH_2-$oder eine Einfachbindung, |

und

m 0, 1 oder 2 bedeutet, und

c) 0 bis 20 Gew.% einer flüssigkristallinen Komponente C bestehend aus einer oder mehreren Verbindungen mit einer dielektrischen Anisotropie von unter -1,5 enthält,

wobei die Komponente A vorzugsweise eine oder mehrere Verbindungen der Teilformel Ia enthält

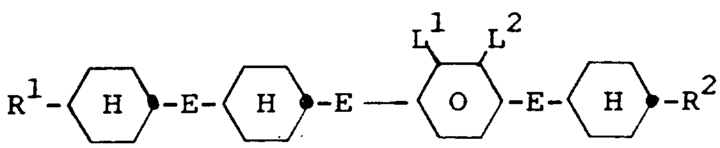

Ia

worin

die Reste E jeweils eine Einfachbindung oder einer der Reste E auch $-CH_2CH_2-$, und $L^1$ oder $L^2$ H und einer der Reste $L^1$ und $L^2$ Fluor bedeutet,

und die nematische Flüssigkristallmischung einen nematischen Phasenbereich von mindestens 60 °C, eine Viskosität bei 20 °C von maximal 30 mPa.s und eine mittlere Dielektrizitätskonstante $\bar{\epsilon} \leq 8$ aufweist.

Gegenstand der Erfindung ist somit auch eine MFK-Anzeige mit

- zwei planparallelen Trägerplatten, die mit einer Umrandung eine Zelle bilden,
- integrierten nicht-linearen Elementen zur Schaltung einzelner Bildpunkte auf den Trägerplatten und
- einer in der Zelle befindlichen nematischen Flüssigkristallmischung mit positiver dielektrischer Anisotropie und hohem spezifischem Widerstand,

wobei die Flüssigkristallmischung auf folgenden Komponenten basiert:

a) mindestens 10 Gew.% einer flüssigkristallinen Komponente B bestehend aus einer oder mehreren Verbindungen mit einer dielektrischen Anisotropie von über +1,5,

b) bis zu 90 Gew.% einer flüssigkristallinen Komponente A bestehend aus einer oder mehreren Verbindungen mit einer dielektrischen Anisotropie von -1,5 bis +1,5 der allgemeinen Formel I

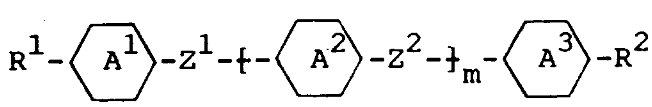

I

worin

| | |
|---|---|
| $R^1$ und $R^2$ | jeweils unabhängig voneinander n-Alkyl, ω-Fluoralkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4-phenylen, trans-1,4-Cyclohexylen oder 1,4-Cyclohexenylen, |

$Z^1$ und $Z^2$ jeweils unabhängig voneinander $-CH_2CH_2-$oder eine Einfachbindung,

und

m 0, 1 oder 2 bedeutet, und

c) 0 bis 20 Gew.% einer flüssigkristallinen <u>Komponente C</u> bestehend aus einer oder mehreren Verbindungen mit einer dielektrischen Anisotropie von unter -1,5,

wobei die Komponente A eine oder mehrere Verbindungen der Teilformel Ia enthält

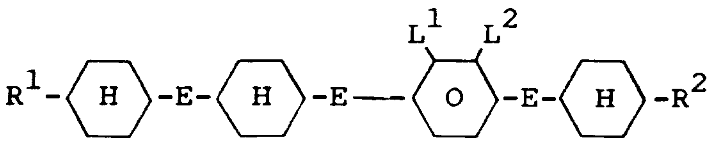
Ia

worin

die Reste E jeweils eine Einfachbindung oder einer der Reste E auch $-CH_2CH_2-$, und $L^1$ oder $L^2$ H und einer der Reste $L^1$ und $L^2$ Fluor bedeutet,

und die nematische Flüssigkristallmischung einen nematischen Phasenbereich von mindestens 60 °C, eine Viskosität bei 20 °C von maximal 30 mPa.s und eine mittlere Dielektrizitätskonstante $\epsilon \leqq 8$ aufweist.

Gegenstand der Erfindung sind auch entsprechende Flüssigkristallmischungen, insbesondere zur Verwendung in MFK-Anzeigen. Die Mischungen eignen sich jedoch auch für viele andere Anwendungen, wie z.B. TN, STN oder OMI.

Der spezifische Widerstand von Flüssigkristallmischungen ist im allgemeinen hoch, wenn die dielektrische Anisotropie klein ist, da die in Mischungen mit hohem $\Delta\epsilon$ vorhandenen polaren Komponenten stabilisierend auf Ionen wirken und somit eine hohe Leitfähigkeit bzw. einen niedrigen Widerstand bedingen. Es wurde nun überraschend gefunden, daß der spezifische Widerstand dann besonders hoch ist, wenn die mittlere Dielektrizitätskonstante $\bar{\epsilon}$ [= $\frac{1}{3}$ (2 $\epsilon_{\perp}$ + $\epsilon_{||}$)] klein ist und gleichzeitig die dielektrisch neutralen ($\Delta\epsilon$ von -1,5 bis +1,5) Komponenten der Flüssigkristallmischung keine funktionellen Gruppen wie zum Beispiel aromatisch gebundenes Alkoxy oder Ester-Funktionen enthalten. Die dielektrisch positiven ($\Delta\epsilon \geqq 1{,}5$) Komponenten tragen üblicherweise terminale Cyan-Gruppen. Vorzugsweise werden in den erfindungsgemäßen Mischungen jedoch neben den Verbindungen mit terminalem Cyan auch solche mit terminalem -NCS, F, Cl, $-CF_3$, $-CHF_2$, $-OCF_3$, $-OCHF_2$, $-OCF_2CF_2H$ oder $-OC_2F_5$ eingesetzt.

Komponente B kann jedoch auch im wesentlichen nur aus nitrilhaltigen Verbindungen bestehen, wobei diejenigen Verbindungen der Formeln IIa bis IIf mit X = CN bevorzugt sind. In diesem Fall besteht die Flüssigkristallmischung im wesentlichen aus den Komponenten A, B und C, bzw. A und B.

Besonders bevorzugt sind Flüssigkristallmischungen enthaltend nitrilhaltige und nitrilfreie, fluorierte Verbindungen, wobei letztere vorzugsweise den Formeln IIa bis IIf entsprechen, worin X F, Cl, $-CF_3$, $-CHF_2$, $-OCF_3$, $-OCHF_2$, $-OCF_2CF_2H$ oder $-OC_2F_5$ bedeutet.

Das Verhältnis nitrilfreie : nitrilhaltige Verbindungen aus Komponente B ist vorzugsweise > 1 : 1, insbesondere > 2 : 1. Besonders bevorzugte Bereiche sind 2,5 : 1 bis 6 : 1.

Ganz besonders bevorzugt sind jedoch Flüssigkristallmischungen, deren Komponente B im wesentlichen aus nitrilfreien, fluorierten Verbindungen besteht. Vorzugsweise kommen die oben genannten bevorzugten Verbindungen der Formeln IIa bis IIf zum Einsatz.

'Im wesentlichen' soll bedeuten, daß der Anteil weiterer Verbindungen in der entsprechenden Komponente $\leqq$ 20 %, insbesondere $\leqq$ 10 % ist.

Weiterhin bevorzugt sind Flüssigkristallmischungen deren Komponente B terminal chlorierte Verbindungen enthält. Derartige Verbindungen sind dem Fachmann bekannt und entsprechen vorzugsweise den Formeln IIa bis IIf und mit X = Cl. In einer besonders bevorzugten Ausführungsform enthalten die Mischungen eine oder mehrere Verbindungen der Formel IIa bis IIf, worin $A^2$-X bzw.

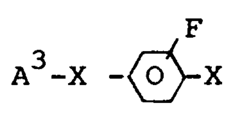

mit X = $CF_3$, $-OCF_3$, $-OCHF_2$ oder Cl bedeutet. Komponente B kann ferner noch 4-kernige Verbindungen enthalten, z.B. entsprechend den Formeln IIc bis IIf, worin einer der Ringe $X^1$ bis $A^3$ doppelt vorhanden ist.

In einer besonders bevorzugten Ausführungsform enthalten die Mischungen Verbindungen mit terminalem Nitril in einem Anteil von 0 bis 50 Gew. % in Komponente B. Besonders bevorzugt sind Mischungen, die keine Verbindungen mit terminalem Nitril enthalten. Überraschenderweise wurde gefunden, daß Gruppen wie $-OCF_3$, $-OCHF_2$, $-OCF_2CF_2H$ oder $-OC_2F_5$ Ionen in den Displays bedeutend weniger stabilisieren als $-OCH_3$ bzw. $-OC_2H_5$. Dasselbe gilt auch für aliphatisch gebundenes Alkoxy (Verbindungen der Formeln III und IV).

Die erfindungsgemaßen Mischungen haben vorzugsweise einen spezifischen Widerstand bei 20° von ≧ $10^{12}$ Ω . cm, insbesondere bevorzugt > $10^{13}$ Ω . cm. Das mittlere $\epsilon$ ist vorzugsweise ≦ 7, insbesondere bevorzugt ≦ 5.

Die Werte der dielektrischen Anisotropie der einzelnen Verbindungen der Komponenten A bis C werden bei 20° bestimmt durch Extrapolation aus einer polaren Mischung (enthaltend 24 % p-trans-4-Propylcyclohexylbenzonitril, 36 % p-trans-4-Pentylcyclohexylbenzonitril, 25 % p-trans-4-Heptylcyclohexylbenzonitril und 15 % 4-Cyan-4'-(trans-4-pentylcyclohexyl)-biphenyl) falls die zu bestimmende Verbindung einen Dipol in der Längsachse des Moleküls enthält, bzw. aus einer neutralen Mischung (enthaltend 22 % trans-1-p-Ethylphenyl-4-propylcyclohexan, 20 % trans-1-p-Methoxyphenyl-1-propylcyclohexan, 15 % trans-1-p-Ethoxyphenyl-4-propylcyclohexan, 19 % 4-Ethyl-4-(trans-4-propylcyclohexyl)-biphenyl, 14 % 4-Ethyl-4'-(trans-4-pentylcyclohexyl)-biphenyl, 5 % 4,4'-Bis-(trans-4-propylcyclohexyl)-biphenyl und 5 % 4(trans-4-Pentylcyclohexyl)-4'-(trans-4-propylcyclohexyl)-biphenyl) bei neutralen Verbindungen.

Die erfindungsgemäßen Flüssigkristallmischungen ermöglichen es bei niedrigen Viskositäten gleichzeitig einen hohen Wert für den spezifischen Widerstand zu erreichen, wodurch hervorragende MKF-Anzeigen erzielt werden können. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen.

Die Viskosität bei 20 °C ist vorzugsweise ≦ 25 mPa.s. Der nematische Phasenbereich ist vorzugsweise mindestens 70°, insbesondere mindestens 80°. Vorzugsweise erstreckt sich dieser Bereich mindestens von -20° bis +70°.

Die einzelnen Verbindungen der Formeln I bis IV und deren Unterformeln, die in den erfindungsgemäßen MFK-Anzeigen verwendet werden können, sind entweder bekannt, oder sie können analog zu den bekannten Verbindungen hergestellt werden.

Bevorzugte erfindungsgemäß verwendbare Flüssigkristallmischungen enthalten insgesamt vorzugsweise 10 % bis 90 %, insbesondere 20 % bis 90 % an Verbindungen der Formel I. Falls Komponente B nicht überwiegend aus stark dielektrisch positiven Nitrilkomponenten zusammengesetzt ist, sondern überwiegend nur schwach dielektrisch positive Verbindungen wie zum Beispiel die im folgenden angegebenen fluorierten Verbindungen enthält, kann Komponente A unter Umständen ganz entfallen und die erfindungsgemäßen Mischungen in dieser besonderen Ausführungsform lediglich auf Komponente B und ggf. Komponente C basieren. Besonders bevorzugt sind Flüssigkristallmischungen, deren Komponente B eine oder mehrere Verbindungen ausgewählt aus der Gruppe bestehend aus Verbindungen der Formeln IIa bis IIf enthält,

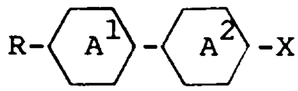

IIa

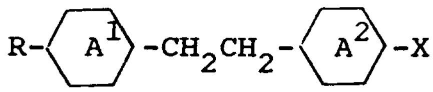

IIb

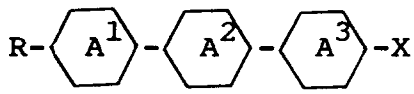

IIc

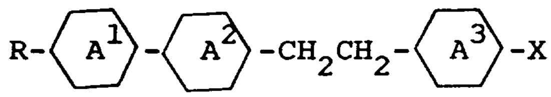

IId

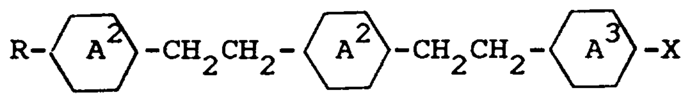

IIe

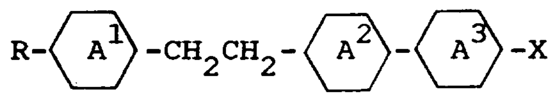

IIf

worin

| | |
|---|---|
| R | n-Alkyl oder n-Alkenyl mit bis zu 9 C-Atomen, |
| X | Cyan, -NCS, F, Cl, $-CF_3$, $-CHF_2$, $-OCF_3$, $-OCHF_2$, $-OCF_2CF_2H$ oder $-OC_2F_5$, und |
| die Ringe $A^1$, $A^2$ und $A^3$ | jeweils unabhängig voneinander 1,4-Phenylen, 2- oder 3-Fluor-1,4-phenylen, 2,3-Difluor-1,4-phenylen, trans-1,4-Cyclohexylen oder 1,4-Cyclohexenylen bedeuten. |

Vorzugsweise enthält Komponente B Verbindungen der Formeln IIa bis IIf, worin X Cyan bedeutet, und Verbindungen der Formeln IIa bis IIf, worin X -NCS, F, Cl, $-CF_3$, $-CHF_2$, $-OCF_3$, $-OCHF_2$, $-OCF_2CF_2H$ oder $-OC_2F_5$ bedeutet, und der Anteil der Cyanverbindungen in Komponente B beträgt 0 bis 50 Gew.%.

In einer besonders bevorzugten Ausführungsform enthält Komponente B keine Verbindungen der Formeln IIa bis IIf, worin X Cyan bedeutet.

In den Verbindungen der Teilformeln IIa bis IIf bedeutet X vorzugsweise F, Cl, $CF_3$, $-OCF_3$, $-OCHF_2$ oder $CHF_2$.

Die Ringe $A^1$, $A^2$ und $A^3$ bedeuten vorzugsweise jeweils unabhängig voneinander trans-1,4-Cyclohexylen oder 1,4-Phenylen. Einer der Ringe $A^1$, $A^2$ und $A^3$ ist in einer bevorzugten Ausführungsform 2- oder 3-Fluor-1,4-phenylen oder 2,3-Difluor-1,4-phenylen. Der mit X verbundene Ring (d.h. $A^2$ in IIa und IIb bzw. $A^3$ in IIc bis IIf) ist vorzugsweise 1,4-Phenylen, welches ggf. auch durch Fluor ein- oder zweifach substituiert sein kann. $A^2$-X bzw. $A^3$-X ist vorzugsweise eine Gruppe ausgewählt aus den Formeln (a) bis (h):

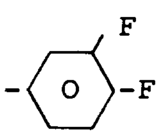

(a)

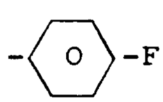

(b)

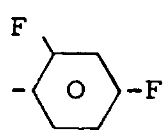

(c)

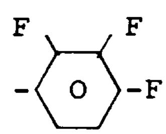

(d)

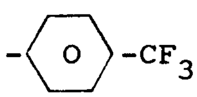

(e)

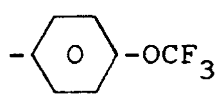

(f)

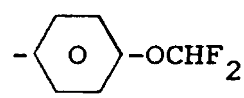

(g)

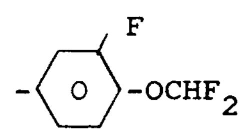

(h)

wobei (a), (b), (d), (f), (g) und (h) besonders bevorzugt sind.

Besonders bevorzugte kleinere Gruppen von Verbindungen sind im folgenden angegeben:

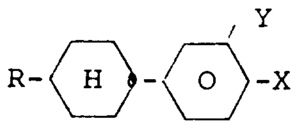

IIa1

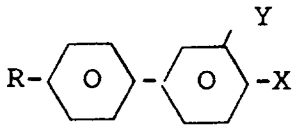

IIa2

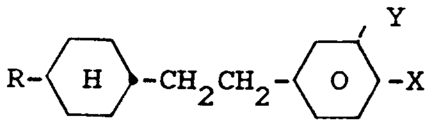

IIb1

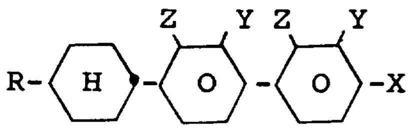

IIc1

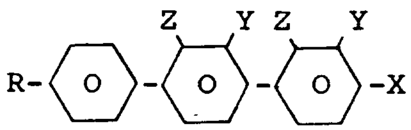

IIc2

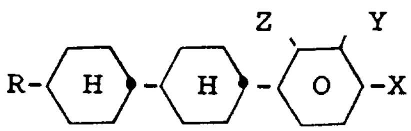

IIc2

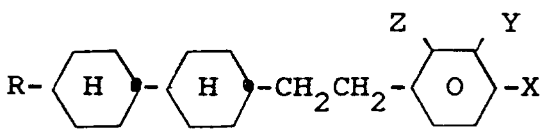

Id1

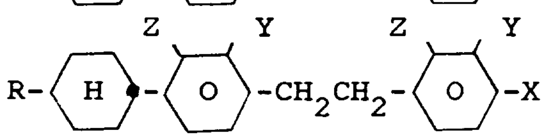

Id2

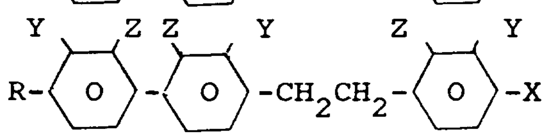

Id3

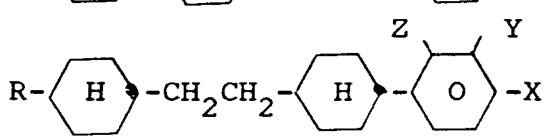

If1

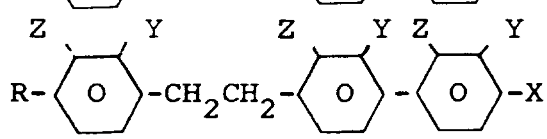

IIf2

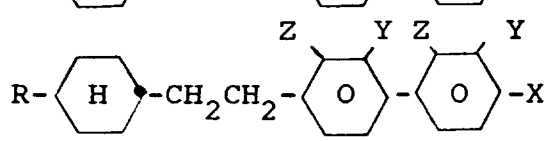

IIf3

In den Teilformeln IIa1 bis IIf3 bedeutet R jeweils n-Alkyl oder n-Alkenyl mit bis zu 9 C-Atomen. Y und Z sind jeweils unabhängig voneinander H oder F, wobei jedoch vorzugsweise einer oder zwei der Reste Y und Z Fluor bedeuten. X ist jedoch vorzugsweise F, Cl, $-CF_3$ , $-OCF_3$ oder $-OCHF_2$.

Komponente B macht vorzugsweise 10 % bis 100 %, insbesondere 20 % bis 80 % der erfindungsgemäßen Mischungen aus.

Komponente A enthält vorzugsweise eine oder mehrere Verbindungen ausgewählt aus der Gruppe bestehend aus II1 bis II7:

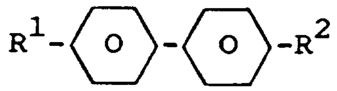

II1

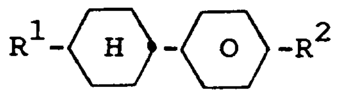

II2

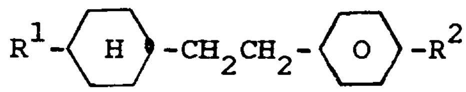

II3

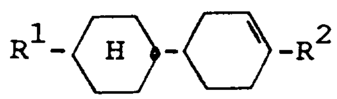

II4

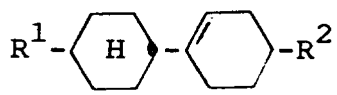

II5

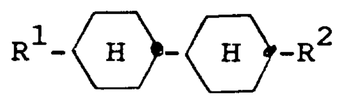

II6

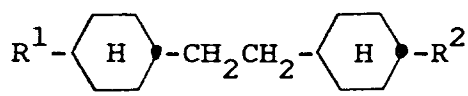

II7

worin $R^1$ und $R^2$ die in Anspruch 1 angegebene Bedeutung haben.

Vorzugsweise enthält Komponente A zusätzlich eine oder mehrere Verbindungen ausgewählt aus der Gruppe bestehend aus II8 bis II20:

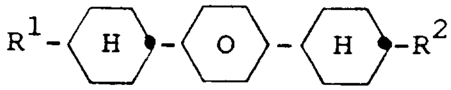 II8

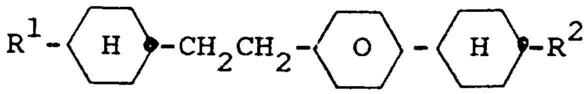 II9

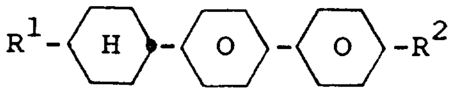 II10

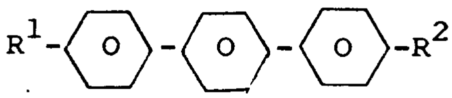 II11

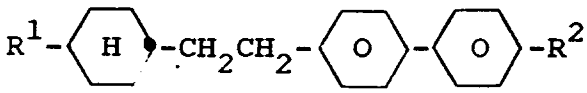 II12

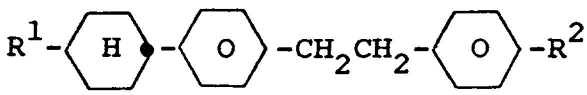 II13

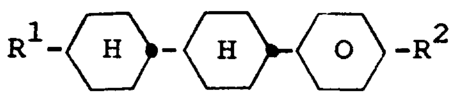 II14

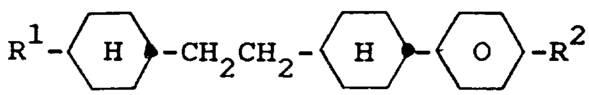 II15

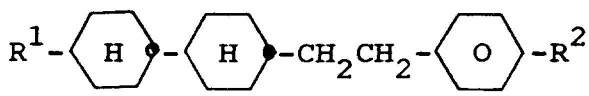 II16

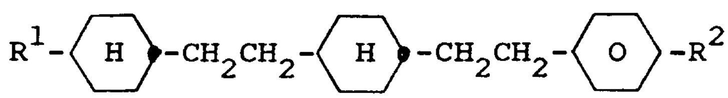 II17

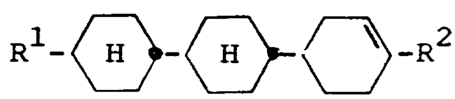 II18

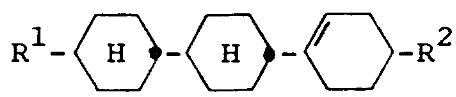 II19

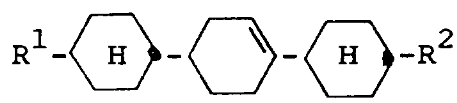 II20

worin $R^1$ und $R^2$ die in Anspruch 1 angegebene Bedeutung haben und die 1,4-Phenylengruppen in II8 bis II17 jeweils unabhängig voneinander auch durch Fluor ein- oder mehrfach substituiert sein können.

Ferner enthält Komponente A vorzugsweise zusätzlich eine oder mehrere Verbindungen ausgewählt aus der Gruppe bestehend aus II21 bis II25 enthält:

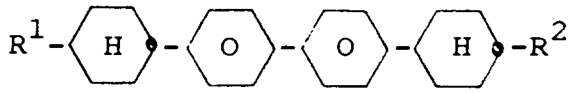 II21

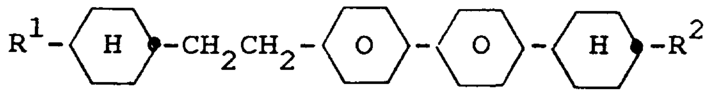 II22

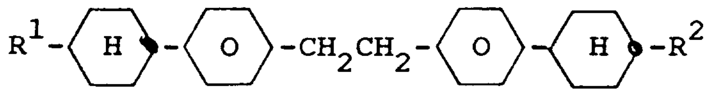 II23

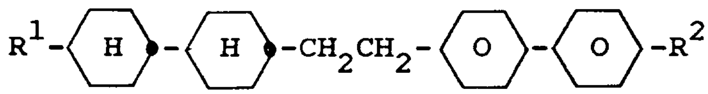 II24

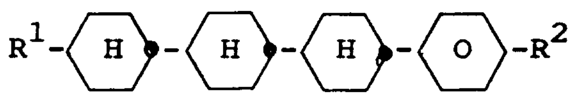 II25

worin $R^1$ und $R^2$ die in Anspruch 1 angegebene Bedeutung haben und die 1,4-Phenylengruppen in II21 bis II25 jeweils unabhängig voneinander auch durch Fluor ein- oder mehrfach substituiert sein können.

Schließlich sind derartige Mischungen bevorzugt, deren Komponente A eine oder mehrere Verbindungen ausgewählt aus der Gruppe bestehend aus II26 und II27 enthält:

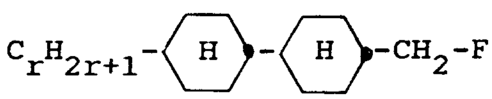 II26

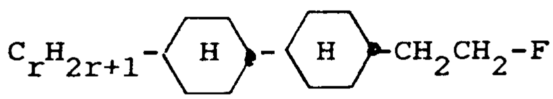 II27

worin $C_rH_{2r+1}$ eine geradkettige Alkylgruppe mit bis zu 7 C-Atomen ist.

In einigen Fällen erweist es sich den Zusatz von Verbindungen der Formel

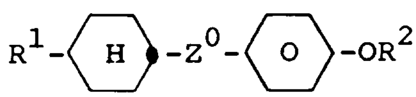

worin

$R^1$ und $R^2$ die in Anspruch 1 angegebene Bedeutung haben

und

$Z^0$ eine Einfachbindung,

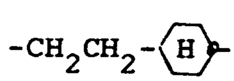 oder 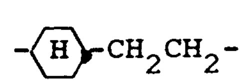

bedeutet,

zur Unterdrückung smektischer Phasen als vorteilhaft, obwohl hierdurch der spezifische Widerstand erniedrigt wird. Zur Erzielung von für die Anwendung optimaler Parameterkombinationen kann der Fachmann leicht feststellen, ob und falls ja in welcher Menge diese Verbindungen zugesetzt sein können. Normalerweise werden weniger als 15 %, insbesondere 5-10 % verwendet.

Ferner bevorzugt sind Flüssigkristallmischungen, die neben den Komponenten A, B und C zusätzlich eine oder mehrere Verbindungen ausgewählt aus der Gruppe bestehend aus III und IV enthalten:

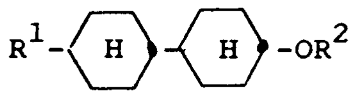

III

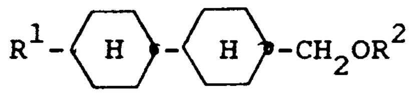

IV

worin $R^1$ und $R^2$ die oben angegebene Bedeutung haben, und/oder eine oder mehrere Verbindungen ausgewählt aus der Gruppe bestehend aus V und VI

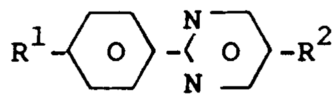

V

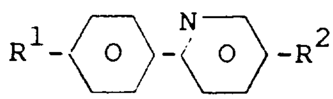

VI

worin $R^1$ und $R^2$ die oben angegebene Bedeutung haben, und/oder eine oder mehrere Verbindungen ausgewählt aus der Gruppe bestehend aus VII bis XI enthalten

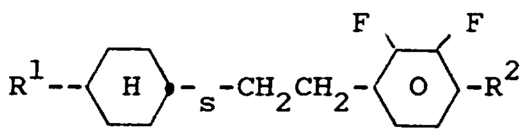

VII

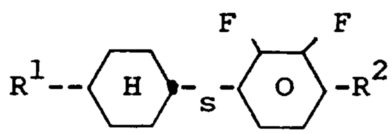

VIII

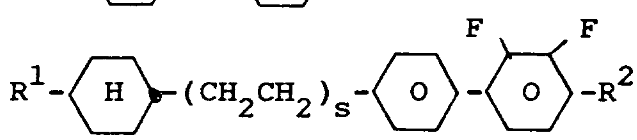

IX

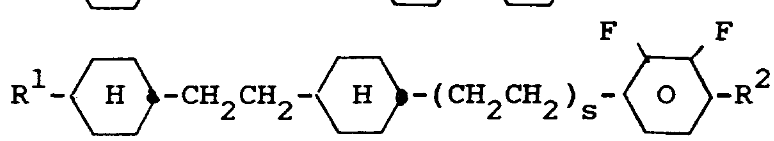

X

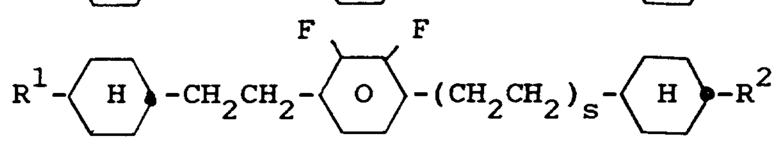

XI

worin $R^1$ und $R^2$ die oben angegebene Bedeutung haben und s 0 oder 1 ist.

Der Anteil der Verbindungen der Formeln III bis XI in den erfindungsgemäßen Mischungen (bevorzugte Bereiche) geht aus folgender Tabelle hervor:

| | |
|---|---|
| Summe der Verbindungen III und IV: | 0 % bis 40 %, vorzugsweise 10 % bis 30 % |
| Summe der Verbindungen V und VI: | 0 % bis 40 %, vorzugsweise 5 % bis 20 % |
| Summe der Verbindungen VII bis XI: | 0 % bis 20 % vorzugsweise 5 % bis 15 % |

Der Anteil der Verbindung(en) der Teilformel Ia ist vorzugsweise 3 bis 15 %, insbesondere bevorzugt 5 bis 10 %.

Vorzugsweise enthält Komponente A eine oder mehrere Verbindungen ausgewählt aus der Gruppe bestehend aus Iae bis Iah:

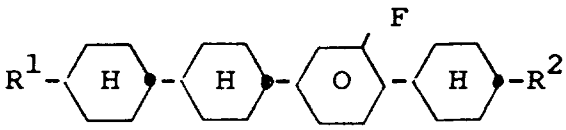 Iae

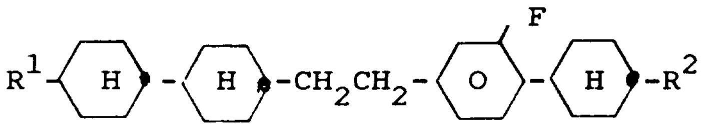 Iaf

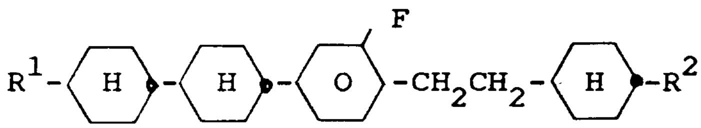 Iag

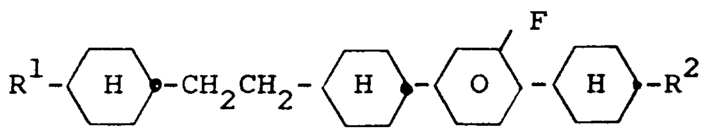 Iah

und/oder
eine oder mehrere Verbindungen ausgewählt aus der Gruppe bestehend aus Iaj bis Iam:

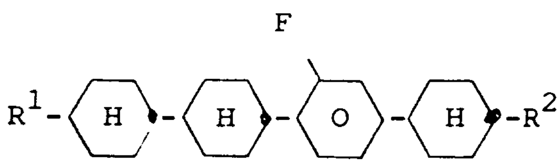 Iaj

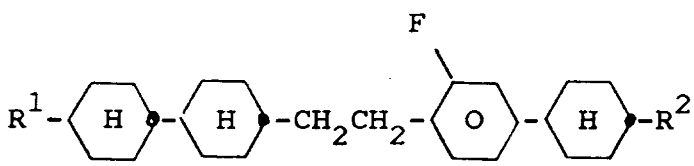 Iak

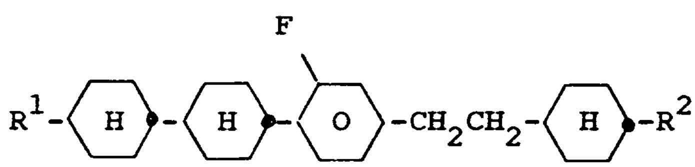 Ial

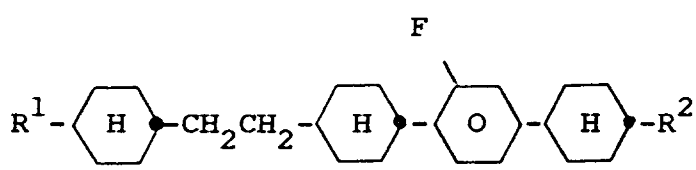 Iam

Die Verbindungen der Formel Ia sind neu und ebenfalls Gegenstand der vorliegenden Erfindung. Sie können aus bekannten Ausgangsmaterialien nach Standardmethoden gemäß folgender Syntheseschemata hergestellt werden:

Schema 1

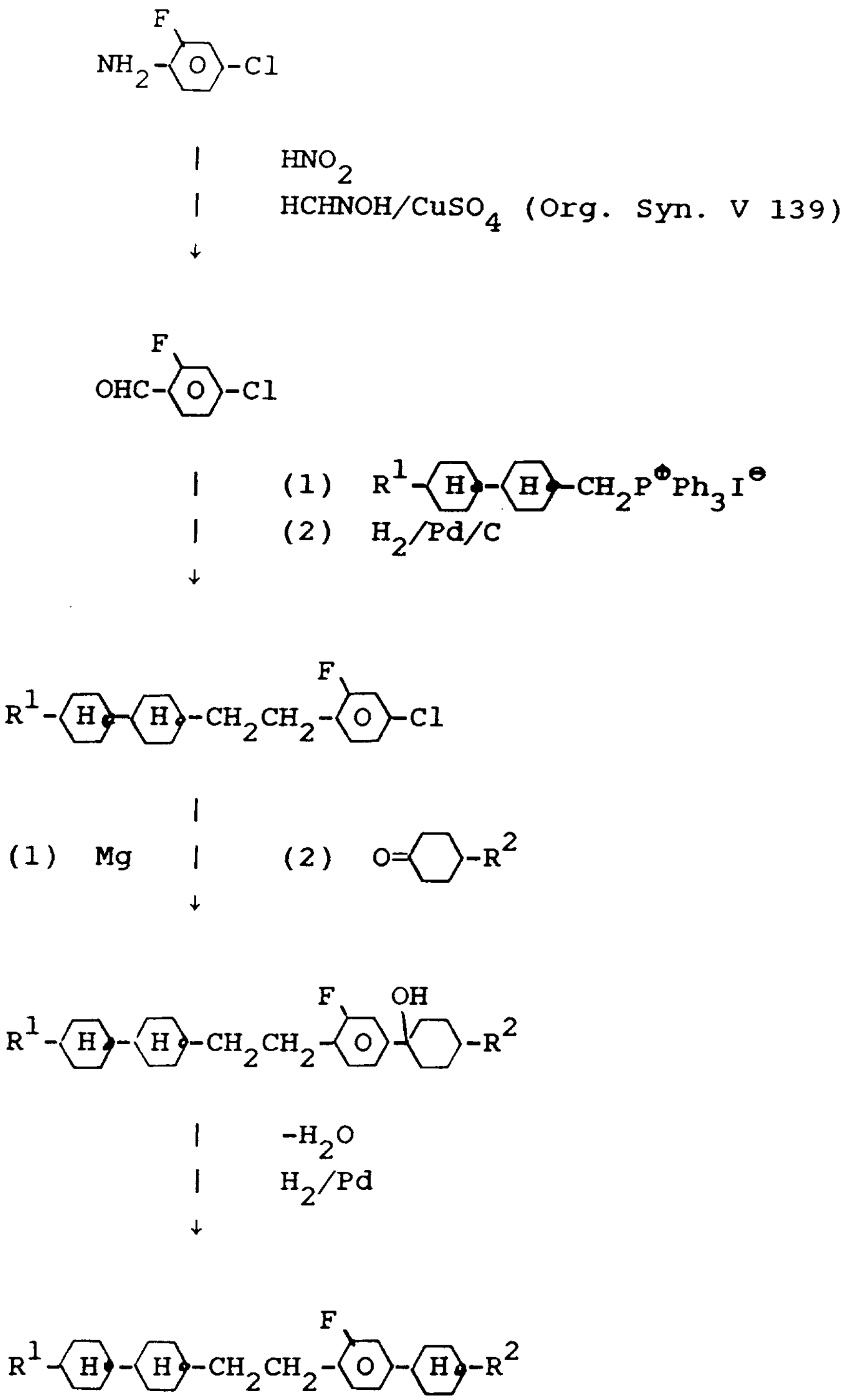


Iak

Schema 2

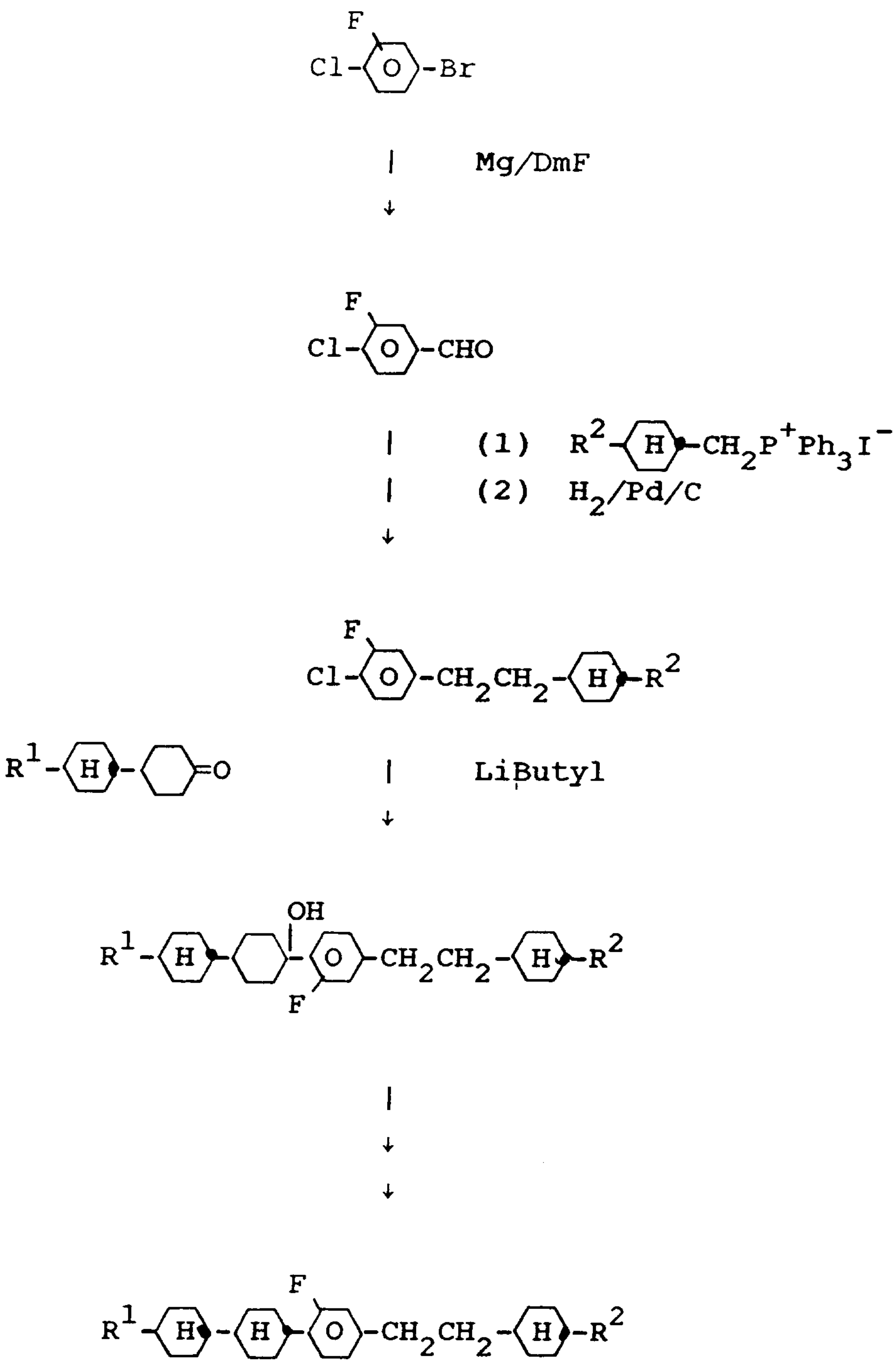


Ial

Schema 3

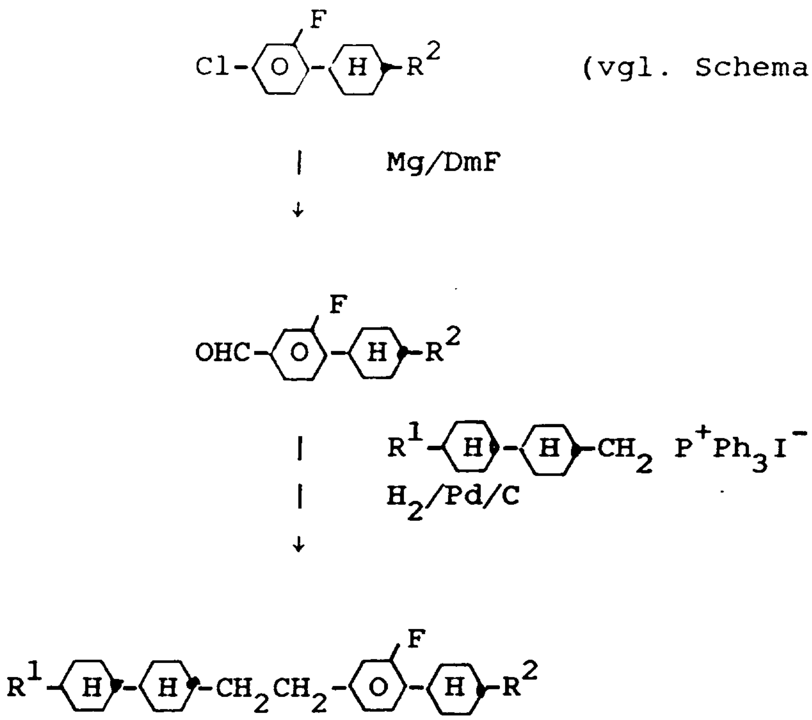


(vgl. Schema 6)

Iaf

Schema 4

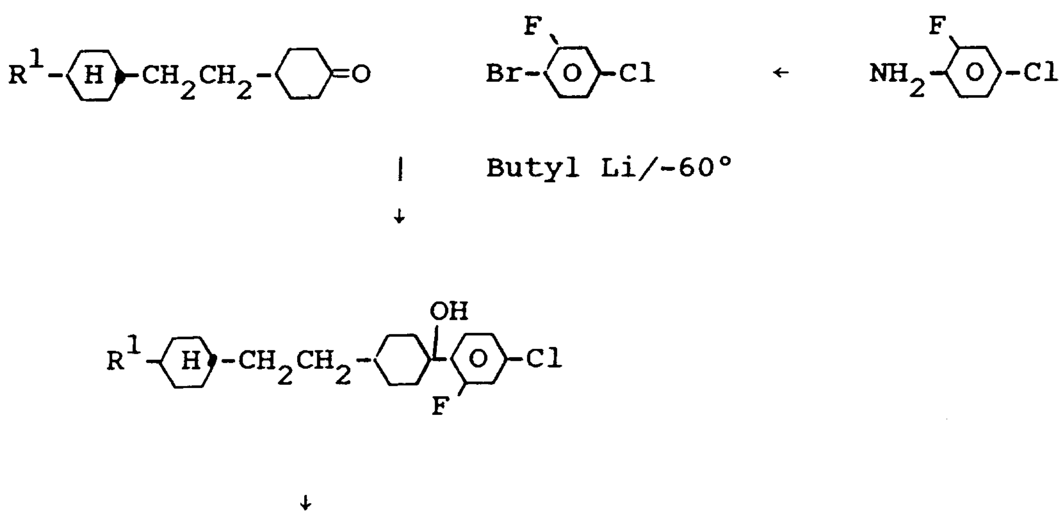

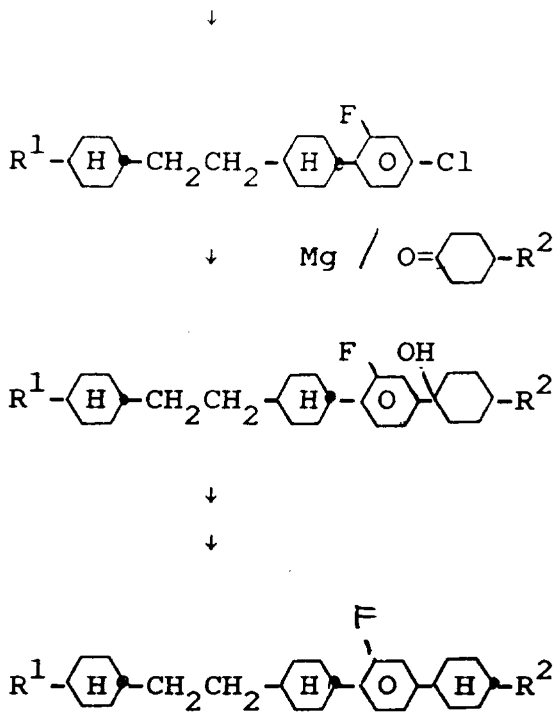


Iam

Schema 5

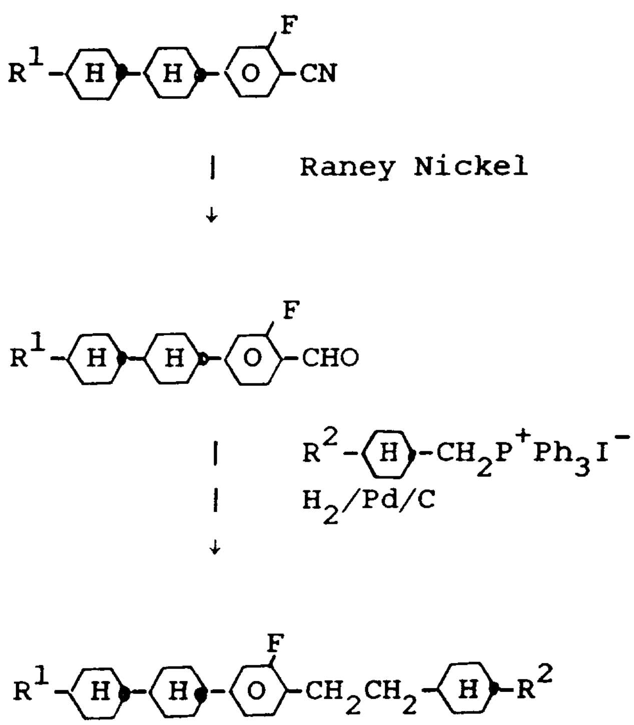


Iag

Schema 6

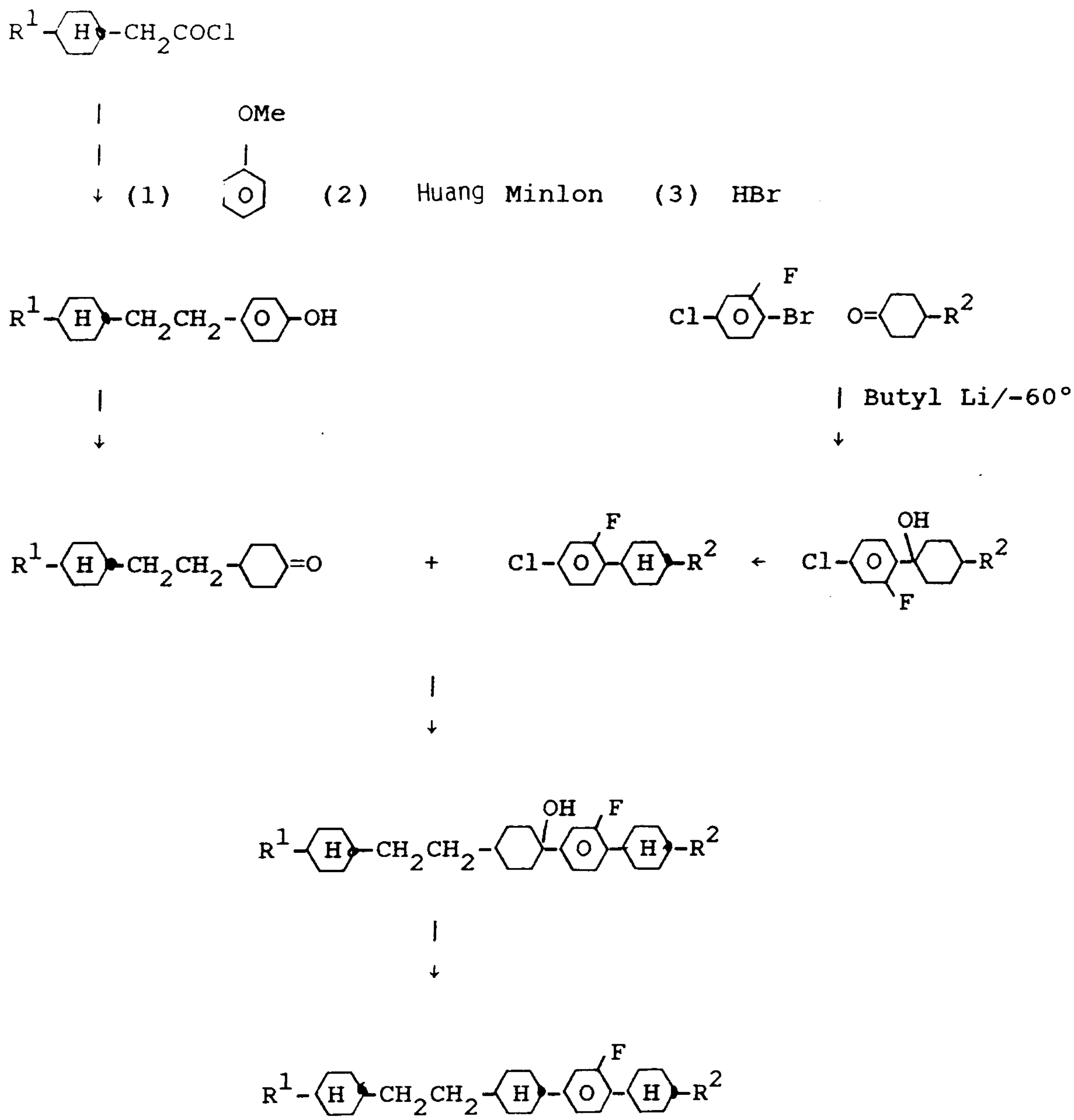

Schema 7

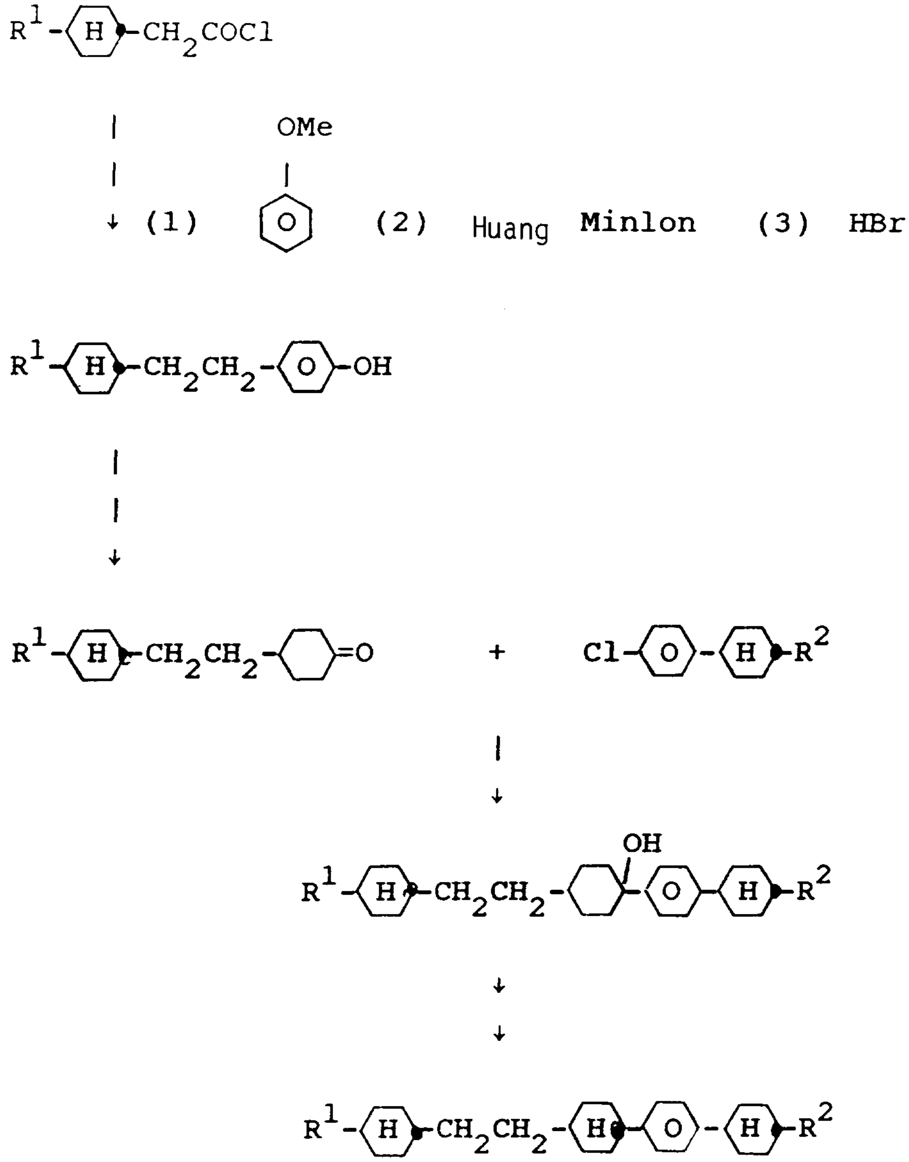


Iad

Ebenfalls neu und Gegenstand der vorliegenden Erfindung sind die Verbindungen der Formel I'

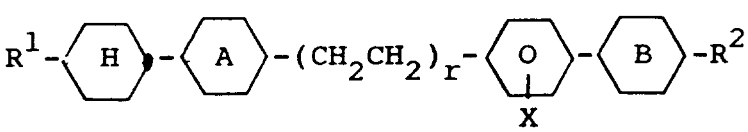

I'

worin

| | |
|---|---|
| $R^1$ und $R^2$ | jeweils unabhängig voneinander Alkyl mit bis zu 9 C-Atomen, worin auch eine $CH_2$-Gruppe durch O ersetzt sein kann, |
| Ring A | ist trans-1,4-Cyclohexylen |
| Ring B | ist trans-1,4-Cyclohexylen oder |

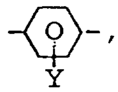

r ist 0 oder 1, und

X und Y jeweils unabhängig voneinander H oder F in einer oder mehreren Lateralpositionen bedeuten,

mit der Maßgabe, daß mindestens einer der im Molekül der Formel I' vorhandenen Reste X und Y Fluor bedeutet,

sowie

Verbindungen der Formel Ib

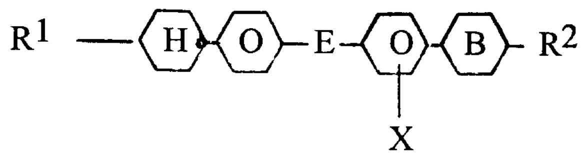

Ib

worin

E eine Einfachbindung oder $-CH_2CH_2-$,

$R^1$ und $R^2$ jeweils unabhängig voneinander Alkyl mit bis zu 9 C-Atomen, worin auch eine $CH_2$-Gruppe durch O ersetzt sein kann,

Ring B

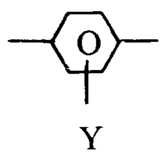

,

und

X und Y jeweils unabhängig voneinander H oder F in einer oder mehreren Lateralpositionen bedeuten,

mit der Maßgabe, daß mindestens einer der im Molekül der Formel Ib vorhandenen Reste X oder Y Fluor bedeutet.

Die Verbindungen der Formel I' und Ib können als Komponenten flüssigkristalliner Medien verwendet werden, insbesondere in Displays nach dem Prinzip der verdrillten Zelle (einschließlich höherverdrillter Zellen wie STN, SBE, OMI etc.), dem Guest-Host-Effekt, dem DAP-Effekt oder dem Effekt der dynamischen Streuung.

Ähnliche Verbindungen sind bekannt aus EP-A-0 125 563. Die dort beschriebenen Verbindungen mit 4 Ringen neigen zur Induzierung smektischer Phasen und/oder nicht ausreichender Löslichkeit besonders bei tiefen Temperaturen. Beispielsweise zeigt trans,trans-4-[2-p-(trans-4-propylcyclohexyl)-phenylethyl]-4'-propylbicyclohexyl die folgende Phasensequenz: C 60 S 233 N 261 I.

Der Erfindung liegt die Aufgabe zugrunde, neue, stabile, flüssigkristalline Verbindungen aufzufinden, die vorzugsweise für MFK-Anzeigen geeignet sind und nicht oder nur in geringem Maße die Nachteile der Verbindungen aus dem Stand der Technik zeigen.

Überraschenderweise wurde gefunden, daß die Verbindungen der Formel I' und Ib diese Aufgabe hervorragend lösen und die Herstellung von flüssigkristallinen Medien mit sehr hohem spezifischen Widerstand und gleichzeitig vorteilhaften elektrooptischen Eigenschaften ermöglichen. Die Verbindungen der Formel I' und Ib zeigen völlig überraschend eine hervorragende Löslichkeit in vielen Flüssigkristallbasismaterialien verschiedenster Substanzklassen selbst bei -20 °C.

Die Verbindungen der Formel I' und Ib stellen somit sehr attraktive Komponenten für flüssigkristalline Medien für elektrooptische Anwendungen dar, wobei die folgenden besonders vorteilhaften Punkte herausgestellt werden können:

(a) niedrige Schmelzpunkte, wodurch die Formulierung niedrig schmelzender Medien ermöglicht wird;

(b) hohe Klärpunkte und ein außerordenlich breiter nematischer Bereich, wodurch die Formulierung von Medien mit breiten nematischen Bereichen ermöglicht wird;
(c) geringe Tendenz zur Ausbildung smektischer Phasen in Kombination mit nematischen Materialien mit positiver dielektrischer Anisotropie;
(d) hervorragende Löslichkeit in nematischen Materialien mit positiver dielektrischer Anisotropie;
(e) die Eigenschaft, den Klärpunkt weiter zu erhöhen bei Zumischen zu Medien enthaltend dielektrisch positive nematische Materialien und eine hochklärende Komponente;
(f) höhere Doppelbrechung im Vergleich zu bekannten Materialien mit ähnlichen thermischen und Viskositäts-Eigenschaften;
(g) sehr geringe Temperaturabhängigkeit der Schwellenspannung;
(h) gute chemische und photochemische Stabilität.

Die attraktive Kombination dieser Eigenschaften ermöglicht die Formulierung von flüssigkristallinen Medien, die denen aus dem Stand der Technik überlegen sind.

Die Bereitstellung der Verbindungen der Formel I' und Ib verbreitert weiterhin die Palette der unter verschiedenen technologischen Aspekten zur Herstellung nematischer Medien bereitstehender Verbindungen.

Die Verbindungen der Formel I' und Ib haben ein breites Anwendungsgebiet. Vorzugsweise werden sie zu Basismaterialien aus anderen Substanzklassen zugegeben um den Klärpunkt anzuheben ohne andere relevante physikalische Eigenschaften nachteilig zu beeinflussen.

Die Verbindungen der Formel I' und Ib sind farblos und bilden in einem für die elektrooptische Anwendung günstig gelegenen Temperaturbereich nematische Mesophasen. Sie sind chemisch und gegenüber Hitze und Licht sehr stabil.

Die Erfindung betrifft somit auch die Verbindungen der Formel I' und Ib und deren Verwendung als Komponenten flüssigkristalliner Medien. Die Erfindung betrifft auch flüssigkristalline Medien, die eine oder mehrere Verbindungen der Formel I' oder Ib enthalten und Flüssigkristall-Anzeigen, insbesondere elektrooptische Anzeigen, die derartige Medien enthalten.

Die Verbindungen der Formel I' und Ib umfassen solche der bevorzugten Teilformel Ic:

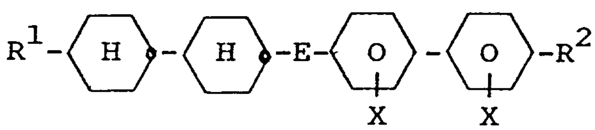

Ic

sowie I'a bis I'f:

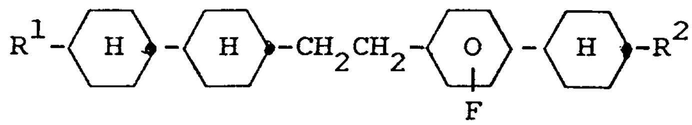

I'a

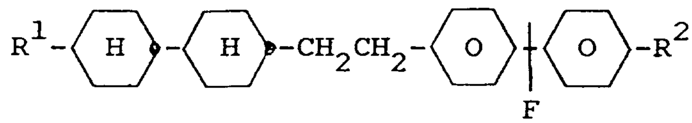

I'b

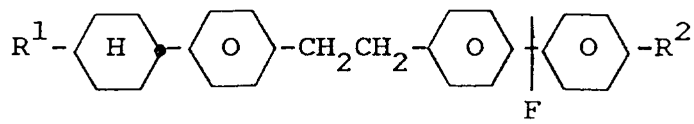

I'c

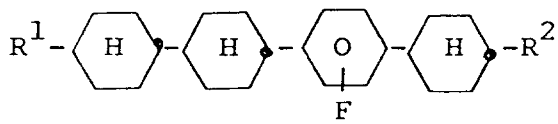

I'd

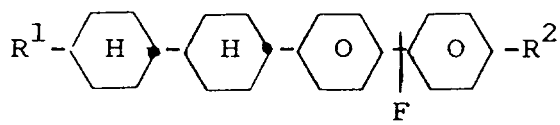

I'e

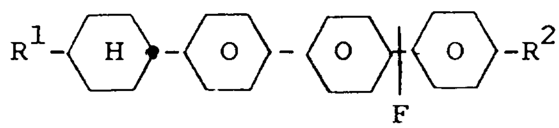

I'f

In den Verbindungen dieser Formeln bedeuten $R^1$ und $R^2$ vorzugsweise Alkyl oder Alkylgruppen, worin eine $CH_2$-Gruppe durch O ersetzt ist (Oxaalkyl oder Alkoxy).

Falls $R^1$ und/oder $R^2$ Alkyl und/oder Alkoxy bedeuten, sind diese Reste geradkettig oder verzweigt. Vorzugsweise sind diese Reste geradkettig und haben 2, 3, 4, 5, 6 oder 7 C-Atome und bedeuten sonst vorzugsweise Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Methoxy, Octoxy oder Nonoxy.

Oxaalkyl ist vorzugsweise geradkettiges 2-Oxapropyl (= Methoxymethyl), 2-(= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl or 2-, 3-, 4-, 5-, 6- or 7-oxaoctyl.

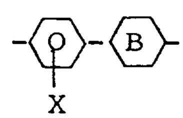

ist vorzugsweise eines der Ringsysteme 1 oder 2, oder in Verbindungen der Formel I' auch 3 oder 4:

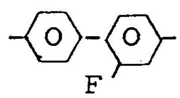

1

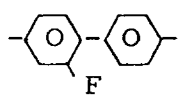

2

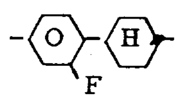

3

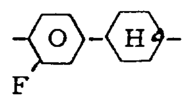

4

Systeme 1, 2 und 3 und insbesondere 1 sind bevorzugt.

Die Verbindungen der Formel I' und Ib können nach bekannten Standardmethoden hergestellt werden. Bevorzugte Synthesen sind im folgenden aufgezeigt:

Schema A:

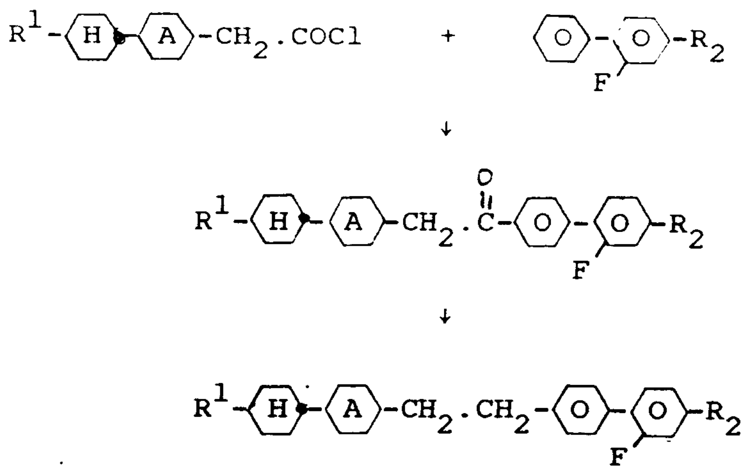

Schema B:

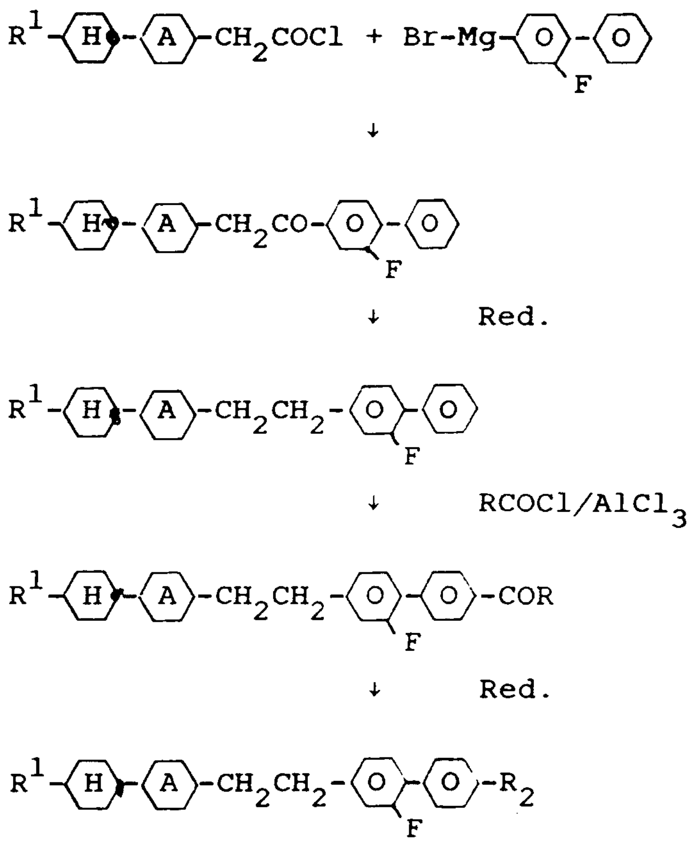

Schema C:

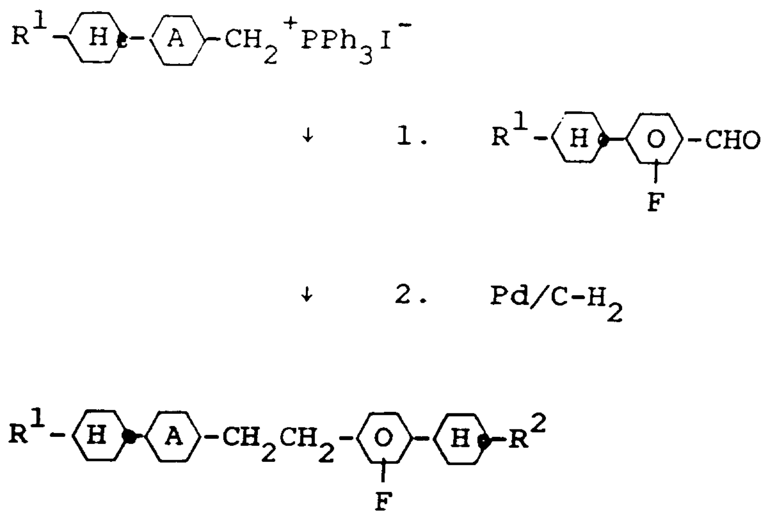


Schema D:

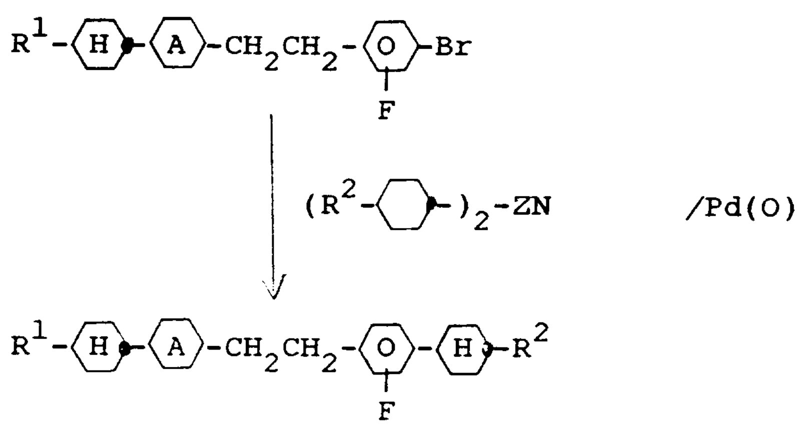

Schema E:

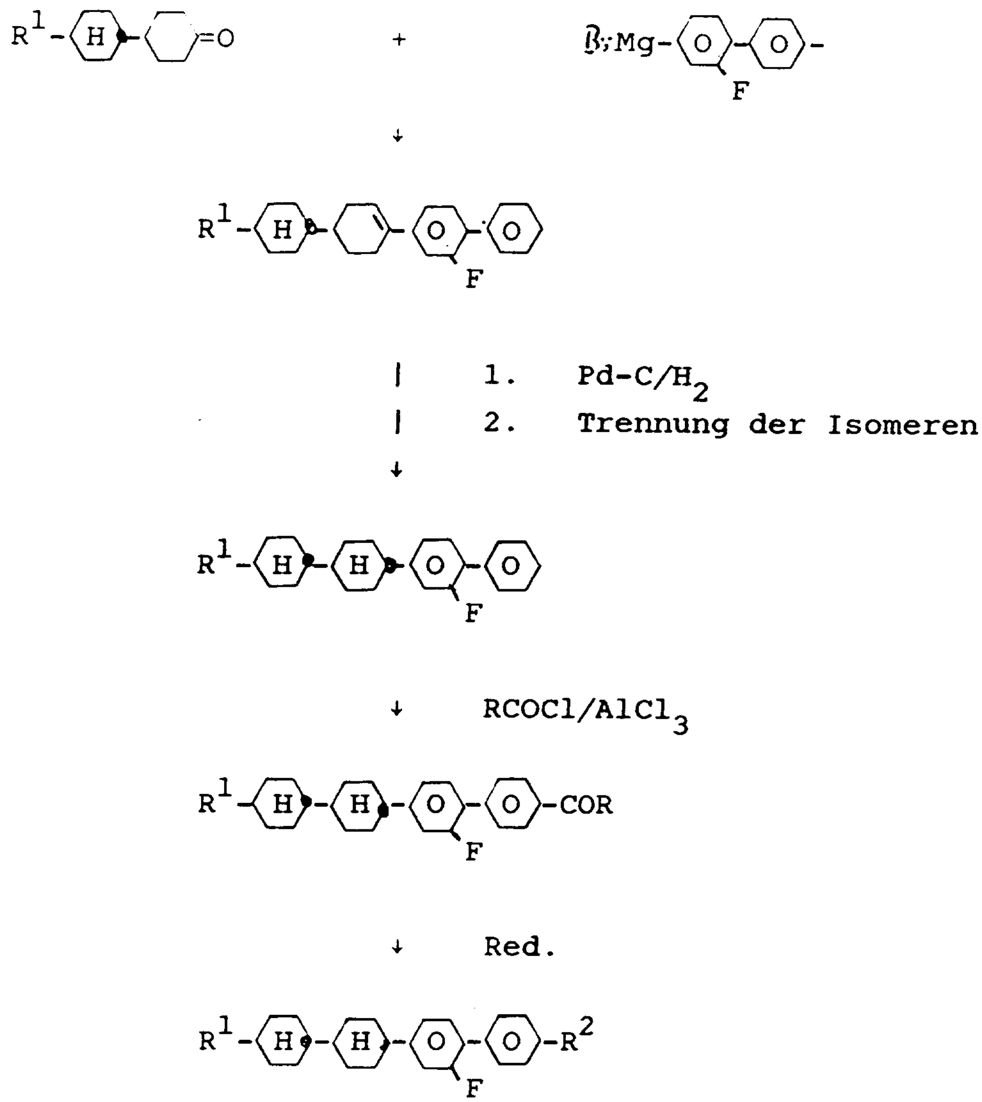

Schema F:

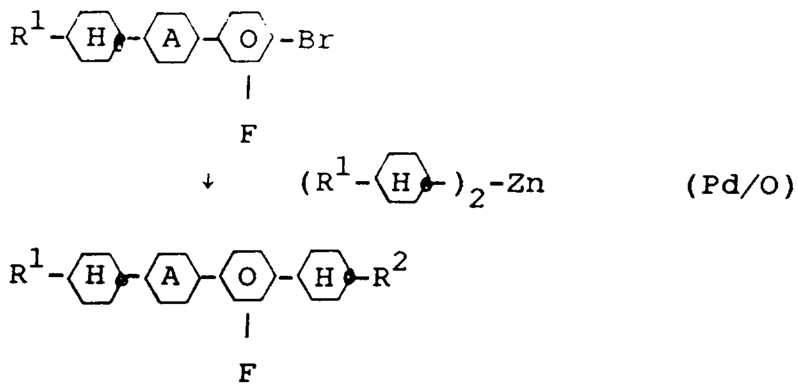


Schema G:

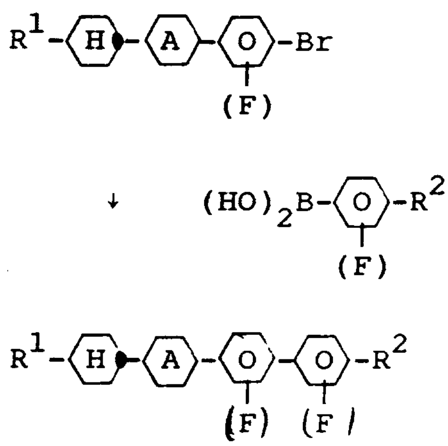

Alle Schritte ebenso wie die Reaktionsverbindungen sind dem Fachmann bekannt. Die Ausgangsmaterialien sind bekannt (z.B. DE-OS 33 17 597, E. Poetsch, Kontakte/Darmstadt 1988 (2), S. 15-28) oder können in einfacher Weise in Analogie zu bekannten Materialien hergestellt werden.

Es versteht sich von selbst, daß die erfindungsgemäßen Mischungen, die vorzugsweise im wesentlichen aus den für die Komponente A bis C angegebenen bevorzugten Verbindungen bestehen, gegebenenfalls auch noch weitere, hier nicht explizit genannte Verbindungen enthalten können. In vielen Fällen resultieren jedoch dann ungünstigere Eigenschaften. Der Fachmann kann leicht feststellen, ob und ggf. in welchen Mengen weitere Verbindungen zum Einsatz kommen können.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, $S_B$ eine smektisch B, N eine nematische und I die isotrope Phase. $V_{10}$ bezeichnet die Spannung für 10 % Transmission (Blickrichtung senkrecht zur Plattenoberfläche). $t_{on}$ bezeichnet die Einschaltzeit und $t_{off}$ die Ausschaltzeit bei einer Betriebsspannung entsprechend dem 2,5-fachen Wert von $V_{10}$. $\Delta n$ bezeichnet die optische Anisotropie und $n_o$ den Brechungsindex. $\Delta\epsilon$ bezeichnet die dielektrische Anisotropie ($\Delta\epsilon = \epsilon_{\|} - \epsilon_{\perp}$, wobei $\epsilon_{\|}$ die Dielektrizitätskonstante parallel zu den Moleküllängsachsen und $\epsilon_{\perp}$ die Dielektrizitätskonstante senkrecht dazu bedeutet. Die elektrooptischen Daten wurden in einer TN-Zelle im 1. Minimum (d.h. bei einem d • $\Delta n$-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste $C_nH_{2n+1}$ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten $R^1$, $R^2$, $L^1$ und $L^2$:

| Code für $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | H | F |
| nF | $C_nH_{2n+1}$ | F | H | H |
| nOF | $OC_nH_{2n+1}$ | F | H | H |
| nCl | $C_nH_{2n+1}$ | Cl | H | H |
| nF.f | $C_nH_{2n+1}$ | F | H | F |
| nOmFF | $C_nH_{2n+1}$ | $OC_mH_{2m+1}$ | F | F |
| nmF | $C_nH_{2n+1}$ | $C_mH_{2m+1}$ | F | H |
| $nCF_3$ | $C_nH_{2n+1}$ | $CF_3$ | H | H |
| $nOCF_3$ | $C_nH_{2n+1}$ | $OCF_3$ | H | H |
| $nOCF_2$ | $C_nH_{2n+1}$ | $OCHF_2$ | H | H |
| nS | $C_nH_{2n+1}$ | NCS | H | H |
| rVsN | $C_rH_{2r+1}-CH=CH-C_sH_{2s}-$ | CN | H | H |
| rEsN | $C_rH_{2r+1}-O-C_sH_{2s}-$ | CN | H | H |
| nNF | $C_nH_{2n+1}$ | CN | F | H |
| nAm | $C_nH_{2n+1}$ | $COOC_mH_{2m+1}$ | H | H |

**Tabelle A:**

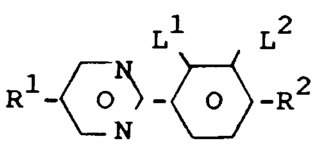

PYP

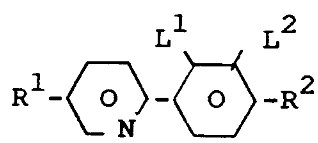

PYRP

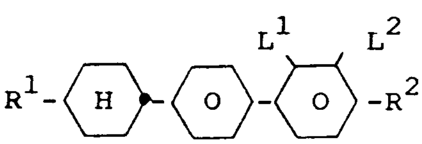

BCH

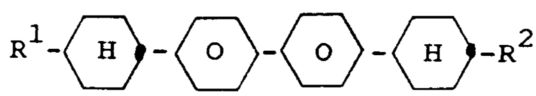

CBC

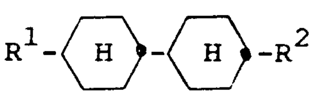

CCH

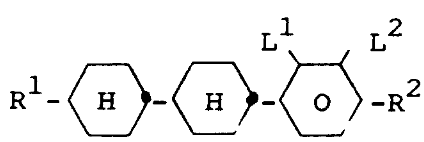

CCP

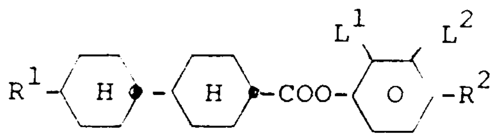

CP

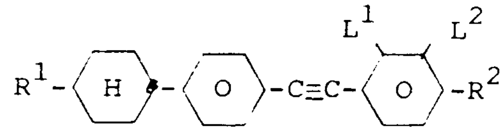

CPTP

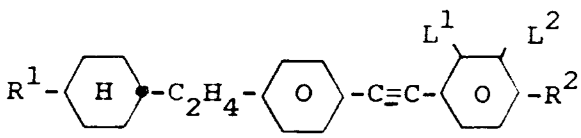

CEPTP

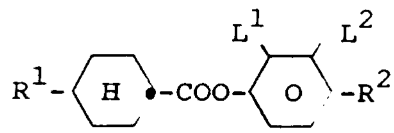

D

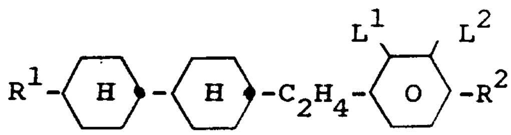

ECCP

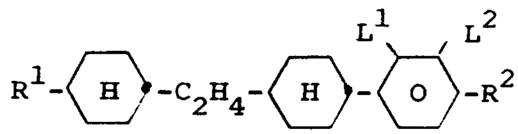

CECP

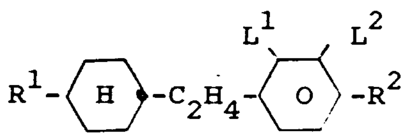

EPCH

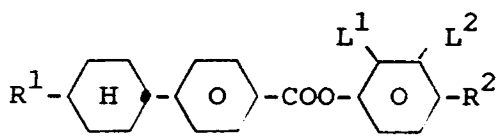

HP

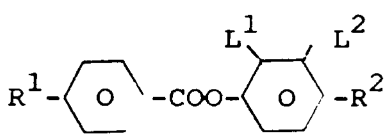

ME

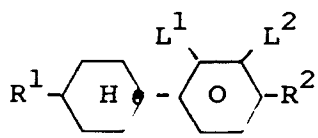

PCH

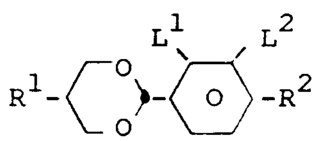

PDX

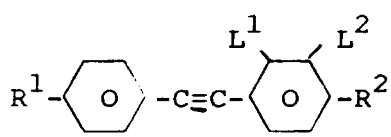

PTP

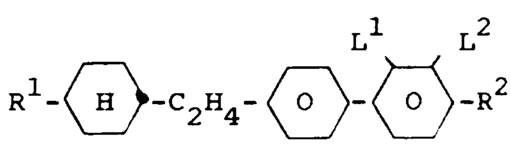

BECH

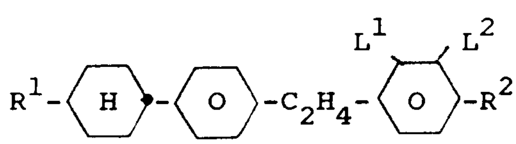

EBCH

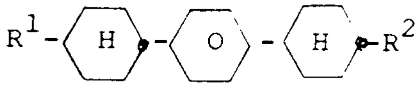

CPC

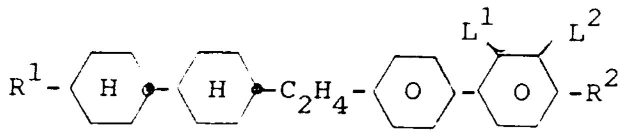

CCEB

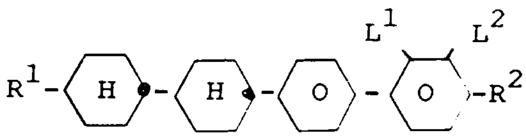

CCB

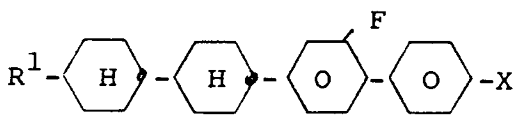

CCB-n.FX

Tabelle B:

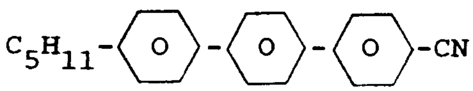

T15

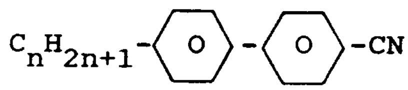

K3n

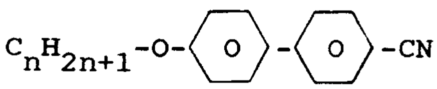

M3n

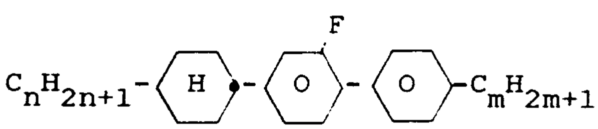

BCH-n.Fm

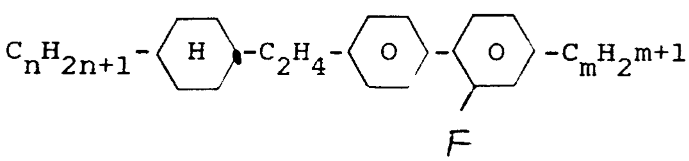

Inm

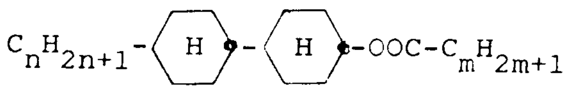

C-nm

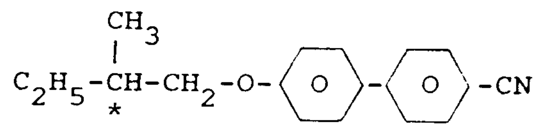

C15

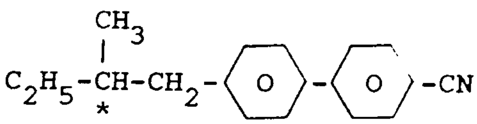

CB15

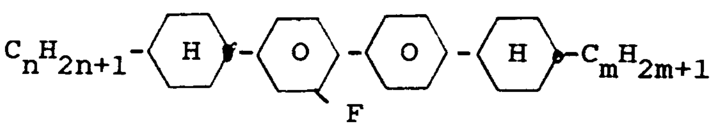

CBC-nmF

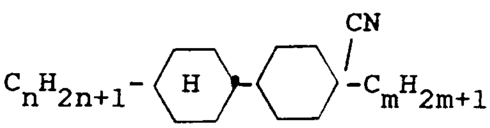

CCN-nm

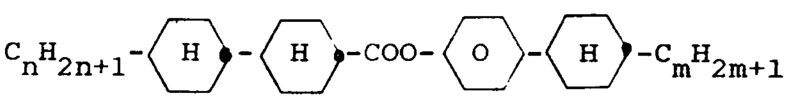

CCPC-nm

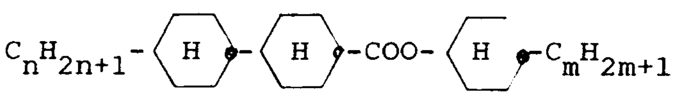

CH-nm

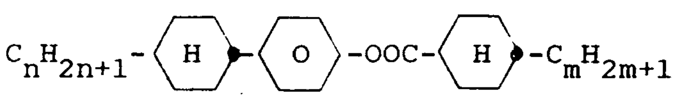

HD-nm

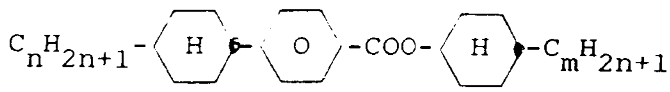

HH-nm

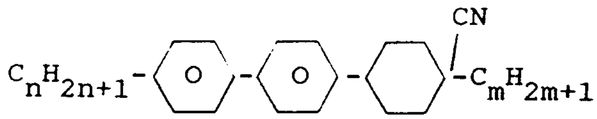

NCB-nm

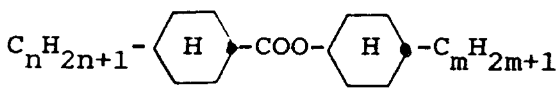

OS-nm

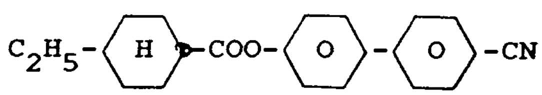

CHE

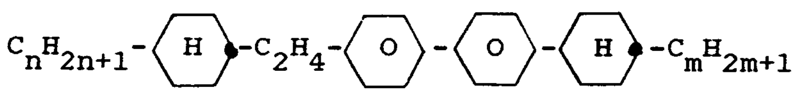

ECBC-nm

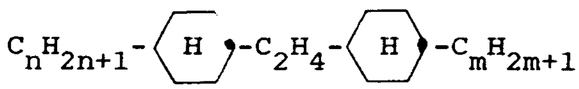

ECCH-nm

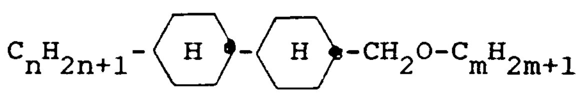

CCH-n1Em

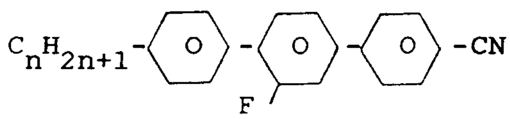

T-nFn

Die in den Tabellen A und B aufgeführten Verbindungen sind bevorzugte Komponenten erfindungsgemäßer Medien. Besonders bevorzugt sind Verbindungen mit $R^2$ = F, Cl, $CF_3$, $OCF_3$ oder $OCHF_2$. $L^2$ ist H oder F und vorzugsweise F. $L^1$ ist vorzugsweise H.

Im folgenden ist die Zusammensetzung der Mischungen der Beispiele 2 bis 11 angegeben, wobei die einzelnen Verbindungen wie folgt codiert sind:

| | |
|---|---|
| PCH-301: | trans-1-p-Methoxyphenyl-4-propylcyclohexan |
| CCH-301: | trans,trans-4-Methoxy-4'-propylcyclohexylcyclohexan |
| CBC-33F: | 4,4'-Bis-(trans-4-propylcyclohexyl)-2-fluorbiphenyl |
| CBE-55F: | 4,4'-Bis-(trans-4-pentylcyclohexyl)-2-fluorbiphenyl |
| CBC-53F: | 4-(trans-4-Pentylcyclohexyl)-4'-(trans-4-propylcyclcohexyl)-2-fluorbiphenyl |
| CBC-33: | 4,4'-Bis-(trans-4-propylcyclohexyl)-biphenyl |
| CBC-55: | 4,4'-Bis-(trans-4-pentylcyclohexyl)-biphenyl |
| CBC-53: | 4-(trans-4-Pentylcyclohexyl)-4'-(trans-4-propylcyclohexyl)-biphenyl |
| ECCP-33: | 1-[trans-4-(trans-4-Propylcyclohexyl)-cyclohexyl]-2-(p-propylphenyl)-ethan |
| CCH-51F: | trans,trans-4-Fluormethyl-4'-pentylcyclohexylcyclohexan |

| | |
|---|---|
| CCH-31F: | trans,trans-4-Fluormethyl-4'-propylcyclohexylcyclohexan |
| PTP-102: | 4-Methyl-4'-ethoxy-tolan |
| PTP-201: | 4-Methoxy-4'-ethyl-tolan |
| CPTP-301: | 4-(trans-4-Propylcyclohexyl)-4'-methoxy-tolan |
| CPTP-302: | 4-(trans-4-Propylcyclohexyl)-4'-ethoxy-tolan |
| CPTP-303: | 4-(trans-4-Propylcyclohexyl)-4'-propoxy-tolan |
| PCH-5F: | trans-1-p-Fluorphenyl-4-pentylcyclohexan |
| PCH-6F: | trans-1-p-Fluorphenyl-4-hexylcyclohexan |
| PCH-7F: | trans-1-p-Fluorphenyl-4-heptylcyclohexan |
| EPCH-20CF$_3$: | 1-(trans-4-Ethylcyclohexyl)-2-(p-trifluormethoxyphenyl)-ethan |
| EPCH-30CF$_3$: | 1-(trans-4-Propylcyclohexyl)-2-(p-trifluormethoxyphenyl)-ethan |
| EPCH-50CF$_3$: | 1-(trans-4-Pentylcyclohexyl)-2-(p-trifluormethoxyphenyl)-ethan |
| EPCH-70CF$_3$: | 1-(trans-4-Heptylcyclohexyl)-2-(p-trifluormethoxyphenyl)-ethan |
| PCH-30CF$_3$: | trans-1-p-Trifluormethoxyphenyl-4-propylcyclohexan |
| PCH-50CF$_3$: | trans-1-p-Trifluormethoxyphenyl-4-pentylcyclohexan |
| ECCP-30CF$_3$: | 1-[trans-4-(trans-4-Propylcyclohexyl)-cyclohexyl]-2-(p-trifluormethoxyphenyl)-ethan |
| ECCP-50CF$_3$: | 1-[trans-4-(trans-4-Pentylcyclohexyl)-cyclohexyl]-2-(p-trifluormethoxyphenyl)-ethan |
| CCP-20CF$_3$: | p-[trans-4-(trans-4-Ethylcyclohexyl)-cyclohexyl]-trifluormethoxybenzol |
| CCP-30CF$_3$: | p-[trans-4-(trans-4-Propylcyclohexyl)-cyclohexyl]-trifluormethoxybenzol |
| CCP-40CF$_3$: | p-[trans-4-(trans-4-Butylcyclohexyl)-cyclohexyl]-trifluormethoxybenzol |
| CCP-50CF$_3$: | p-[trans-4-(trans-4-Pentylcyclohexyl)-cyclohexyl]-trifluormethoxybenzol |
| BCH-30CF$_3$: | 4-Trifluormethoxy-4'-(trans-4-propylcyclohexyl)-biphenyl |
| ECCP-3F.F: | 1-[trans-4-(trans-4-Propylcyclohexyl)-cyclohexyl]-2-(3,4-difluorphenyl)-ethan |
| ECCP-5F.F: | 1-[trans-4-(trans-4-Pentylcyclohexyl)-cyclohexyl]-2-(3,4-difluorphenyl)-ethan |
| CCP-3F.F: | 4-[trans-4-(trans-4-Propylcyclohexyl)-cyclohexyl]-1,2-difluorbenzol |
| CCP-5F.F: | 4-[trans-4-(trans-4-Pentylcyclohexyl)-cyclohexyl]-1,2-difluorbenzol |
| CCP-3F: | 4-[trans-4-(trans-4-Propylcyclohexyl)-cyclohexyl]-fluorbenzol |
| ECCP-3F: | 1-[trans-4-(trans-4-Propylcyclohexyl)-cyclohexyl]-2-(p-fluorphenyl)-ethan |
| ECCP-5F: | 1-[trans-4-(trans-4-Pentylcyclohexyl)-cyclohexyl]-2-(p-fluorphenyl)-ethan |
| CP-3F: | trans-4-(trans-4-Propylcyclohexyl)-cyclohexancarbonsäure-(p-fluorphenylester) |
| CP-5F: | trans-4-(trans-4-Pentylcyclohexyl)-cyclohexancarbonsäure-(p-fluorphenylester) |
| PYP-5F: | 2-p-Fluorphenyl-5-pentylpyrimidin |
| PYP-6F: | 2-p-Fluorphenyl-5-hexylpyrimidin |
| PYP-7F: | 2-p-Fluorphenyl-5-heptylpyrimidin |
| PYP-30CF$_3$: | 2-p-Trifluormethoxyphenyl-5-propylpyrimidin |
| PYP-50CF$_3$: | 2-p-Trifluormethoxyphenyl-5-pentylpyrimidin |
| PYP-70CF$_3$: | 2-p-Trifluormethoxyphenyl-5-heptylpyrimidin |
| PCH-3: | p-trans-4-Propylcyclohexyl-benzonitril |
| PCH-4: | p-trans-4-Butylcyclohexyl-benzonitril |
| PCH-5: | p-trans-4-Pentylcyclohexyl-benzonitril |
| ECCP-3: | 1-[trans-4-(trans-4-Propylcyclohexyl)-cyclohexyl]-2-(p-cyanphenyl)-ethan |
| ECCP-3CF$_3$: | 1-[trans-4-(trans-4-Propylcyclohexyl)-cyclohexyl]-2-(p-trifluormethylphenyl)-ethan |
| ECCP-5CF$_3$: | 1-[trans-4-(trans-4-Pentylcyclohexyl)-cyclohexyl]-2-(p-trifluormethylphenyl)-ethan |
| PYP-5N.F: | 2-(3-Fluor-4-cyanphenyl)-5-pentylpyrimidin |
| PYP-7N.F: | 2-(3-Fluor-4-cyanphenyl)-5-heptylpyrimidin |
| PCH-30CF$_2$: | trans-1-p-Difluormethoxyphenyl-4-propylcyclohexan |
| PCH-50CF$_2$: | trans-1-p-Difluormethoxyphenyl-4-pentylcyclohexan |
| PCH-3-0CF$_2$: | trans-1-p-Difluormethoxyphenyl-4-propylcyclohexan |
| CCEPC-33: | 1-[trans-4-(trans-4-n-Propylcyclohexyl)-cyclohexyl]-2-[p-(trans-4-n-propylcyclohexyl)-phenyl]-ethan |
| CCEPC-33F: | 1-[trans-4-(trans-4-n-Propylcyclohexyl)-cyclohexyl]-2-[4-(trans-4-n-propylcyclohexyl)-2-fluorphenyl]-ethan |
| CCPC-33: | 1-[trans-4-(trans-4-n-Propylcyclohexyl)-cyclohexyl]-4-(trans-4-n-propylcyclohexyl)-benzol |
| CCPC-23: | 1-[trans-4-(trans-4-Ethylcyclohexyl)-cyclohexyl]-4-(trans-4-n-propylcyclohexyl)-benzol |
| CCPEC-33: | 1-[trans-4-(trans-4-n-Propylcyclohexyl)-cyclohexyl]-4-[2-(trans-4-n-propylcyclohexylethyl)-benzol |
| CCPEC-23: | 1-[trans-4-(trans-4-Ethylcyclohexyl)-cyclohexyl]-4-[2-(trans-4-n-propylcyclohexylethyl)- |

| | |
|---|---|
| | benzol |
| CECPC-33: | 1-[trans-4-(2-trans-4-n-Propylcyclohexylethyl)-cyclohexyl]-4-(trans-4-n-propylcyclohexyl)-benzol |

Beispiel 1

| | |
|---|---|
| PCH-301 | 10.00 |
| PCH-7F | 4.00 |
| EPCH-30CF$_3$ | 9.00 |
| EPCH-7OCF$_3$ | 5.00 |
| CCP-30CF$_3$ | 13.00 |
| CCP-50CF$_3$ | 12.00 |
| ECCP-30CF$_3$ | 12.00 |
| ECCP-50CF$_3$ | 8.00 |
| ECCP-3F.F | 12.00 |
| ECCP-3F | 8.00 |
| CCEPC-33 | 5.00 |
| CCEPC-33F | 2.00 |

Beispiel 2

| | |
|---|---|
| PCH-30CF$_2$ | 9.00 |
| PCH-50CF$_2$ | 8.00 |
| PCH-50CF$_2$ | 9.00 |
| CCH-301 | 7.00 |
| CCP-30CF$_3$ | 13.00 |
| CCP-50CF$_3$ | 12.00 |
| ECCP-30CF$_3$ | 8.00 |
| ECCP-50CF$_3$ | 6.00 |
| ECCP-3F.F | 9.00 |
| ECCP-3F | 6.00 |
| CCEPC-33F | 5.00 |
| CCPEC-33 | 4.00 |
| CCPEC-23 | 4.00 |

Beispiel 3

| | |
|---|---|
| PCH-5F | 11.0 |
| PCH-6F | 4.0 |
| PCH-7F | 10.0 |
| CCP-20CF$_3$ | 9.0 |
| CCP-30CF$_3$ | 13.0 |
| CCP-40CF$_3$ | 7.0 |
| CCP-50CF$_3$ | 11.0 |
| ECCP-30CF$_3$ | 10.0 |
| ECCP-50CF$_3$ | 8.0 |
| ECCP-3F.F | 8.0 |
| CBC-33F | 3.0 |
| CCEPC-33 | 3.0 |
| CBC-55F | 3.0 |

Beispiel 4

| | |
|---|---|
| PCH-5F | 13.0 |
| PCH-7F | 10.0 |
| CCP-30CF$_3$ | 13.0 |
| CCP-40CF$_3$ | 11.0 |
| CCP-50CF$_3$ | 12.0 |
| ECCP-30CF$_3$ | 11.0 |
| ECCP-50CF$_3$ | 8.0 |
| CCP-3F.F | 9.0 |
| CCP-5F.F | 6.0 |
| CBC-33F | 3.0 |
| CCEPC-33F | 2.0 |
| CBC-55F | 2.0 |

Beispiel 5

| | |
|---|---|
| PCH-5F | 11.0 |
| PCH-6F | 4.0 |
| PCH-7F | 10.0 |
| CCP-20CF$_3$ | 9.0 |
| CCP-30CF$_3$ | 13.0 |
| CCP-40CF$_3$ | 7.0 |
| CCP-50CF$_3$ | 11.0 |
| CCP-3F.F | 10.0 |
| CCP-5F.F | 8.0 |
| CCP-3F | 8.0 |
| CBC-33F | 3.0 |
| CCEPC-33 | 3.0 |
| CBC-55F | 3.0 |

Beispiel 6

| | |
|---|---|
| PCH-3 | 10.00 |
| PCH-5F | 18.00 |
| PCH-6F | 14.00 |
| PCH-7F | 10.00 |
| CCP-3F.F | 9.00 |
| CCP-5F.F | 7.00 |
| CBC-33 | 5.00 |
| CBC-53 | 6.00 |
| CBC-55 | 5.00 |
| CBC-33F | 5.00 |
| CCEPC-33 | 6.00 |
| CBC-55F | 5.00 |

Beispiel 7

Das nach Schema C erhaltene 1-(trans,trans-4-n-Propylbicyclohexyl)-2-[4-(trans-4-n-propylcyclohexyl)-3-fluorphenyl]-ethen wird an Pd/C bei Normaldruck hydriert. Nach üblicher Aufarbeitung erhält man 1-(trans,trans-4-n-Propylbicyclohexyl)-2-[4-(trans-4-n-propylcyclohexyl)-3-fluorphenyl)-ethan.

Beispiele 8 bis 22:

Die folgenden Verbindungen der Formel I' erhält man gemäß den o.a. Syntheseschemata:

| | $R^1$ | $R^2$ | A | B | 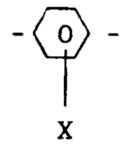 |
|---|---|---|---|---|---|
| (8) | ethyl | n-propyl | 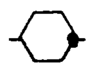 | 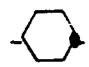 | 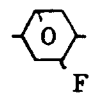 |
| | (a) r = 1 | | | | |
| | (b) r = 0 | | | | |
| (9) | n-pentyl | n-propyl | 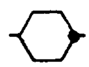 | 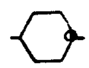 | 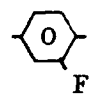 |
| | (a) r = 1 | | | | |
| | (b) r = 0 | | | | |
| (10) | n-propyl | n-propyl | 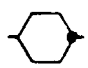 | 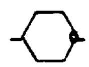 | 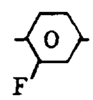 |
| | (a) r = 1 | | | | |
| | (b) r = 0 | | | | |
| (11) | n-propyl | n-pentyl | 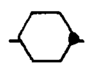 | 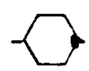 | 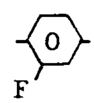 |
| | (a) r = 1 | | | | |
| | (b) r = 0 | | | | |
| (12) | ethyl | n-propyl | 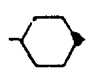 | 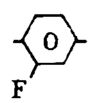 | 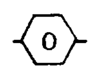 |
| | (a) r = 1 | | | | |
| | (b) r = 0 | | | | |

| | $R^1$ | $R^2$ | A | B | 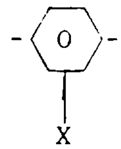 |
|---|---|---|---|---|---|
| (13) | n-propyl | ethyl | 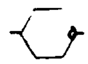 | 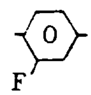 | 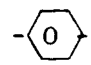 |
| | (a) r = 1 | | | | |
| | (b) r = 0 | | | | |
| (14) | n-pentyl | ethyl | 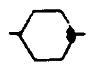 | 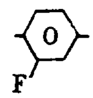 | 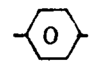 |
| | (a) r = 1 | | | | |
| | (b) r = 0 | | | | |
| (15) | n-pentyl | n-propyl | 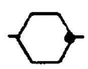 | 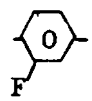 | 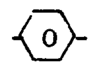 |
| | (a) r = 1 | | | | |
| | (b) r = 0 | | | | |
| (16) | n-propyl | n-propyl | 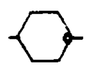 | 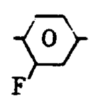 | 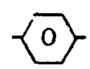 |
| | (a) r = 1 | | | | |
| | (b) r = 0 | | | | |
| (17) | n-propyl | n-proypl | 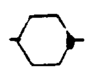 | 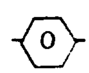 | 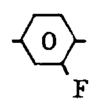 |
| | (a) r = 1 | | | | |
| | (b) r = 0 | | | | |
| (18) | n-propyl | n-propyl | 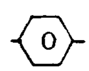 | 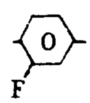 | 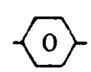 |
| | (a) r = 1 | | | | |
| | (b) r = 0 | | | | |

| | $R^1$ | $R^2$ | A | B | 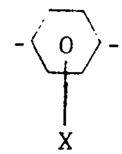 |
|---|---|---|---|---|---|
| (19) | ethyl | n-propyl | 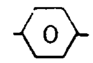 | 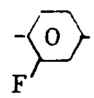 | 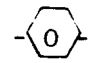 |
| | (a) r = 1<br>(b) r = 0 | | | | |
| (20) | n-propyl | ethyl | 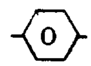 | 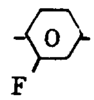 | 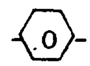 |
| | (a) r = 1<br>(b) r = 0 | | | | |
| (21) | n-pentyl | ethyl | 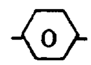 | 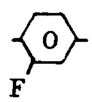 | 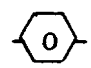 |
| | (a) r = 1<br>(b) r = 0 | | | | |
| (22) | n-pentyl | n-propyl | 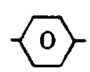 | 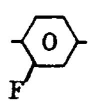 | 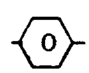 |

## Patentansprüche

1. Flüssigkristallines Medium mit hohem spezifischem Widerstand auf der Basis eines Gemisches von polaren Verbindungen mit einer dielektrischen Anisotropie von über +1,5, dadurch gekennzeichnet, daß es eine oder mehrere Verbindungen ausgewählt aus der Gruppe der Verbindungen der Formeln Iae bis Iam, Ib und Ic enthält

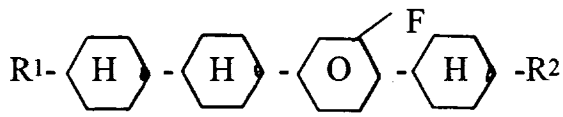
Iae

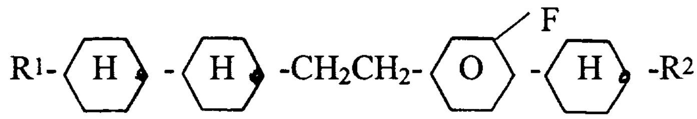
Iaf

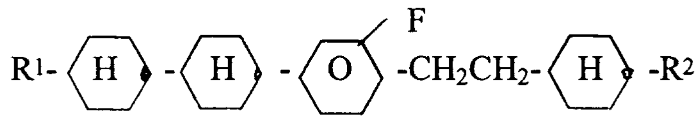
Iag

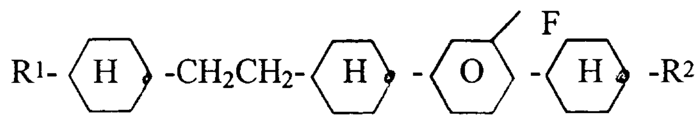
Iah

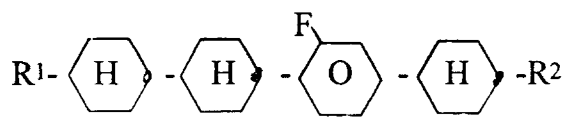
Iaj

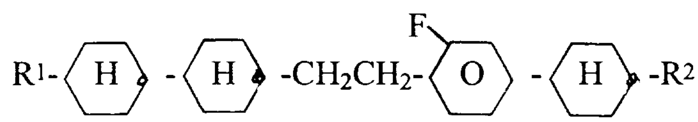
Iak

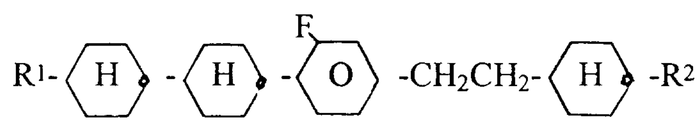
Ial

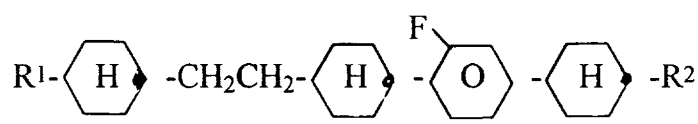
Iam

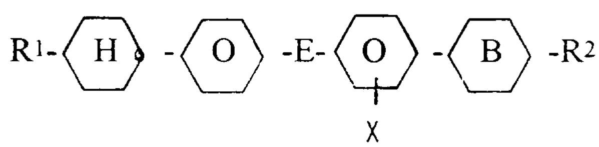
Ib

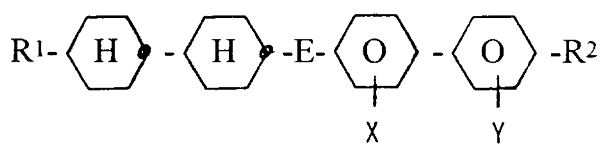
Ic

worin
die Reste E jeweils eine Einfachbindung oder einer der Reste E auch $-CH_2CH_2-$,
Ring B

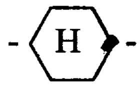 oder 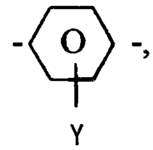

$R^1$ und $R^2$ jeweils unabhängig voneinander n-Alkyl, worin auch eine $CH_2$-Gruppe durch -O-, -CHHal-, -$CHal_2$- oder -CH=CH- ersetzt sein kann, und X und Y unabhängig H oder F bedeuten mit der Maßgabe, daß mindestens einer der im Molekül der Formel Ib und Ic vorhandenen Reste X und Y F bedeutet.

**2.** Medium nach Anspruch 1, dadurch gekennzeichnet, daß es zusätzlich eine oder mehrere Verbindungen ausgewählt aus der Gruppe bestehend aus den allgemeinen Formeln II, III und IV enthält:

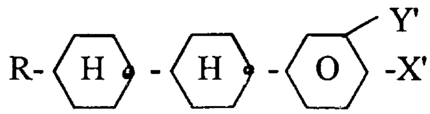 II

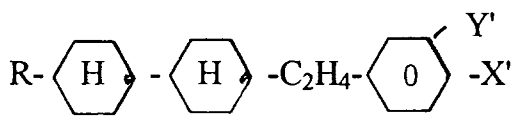 III

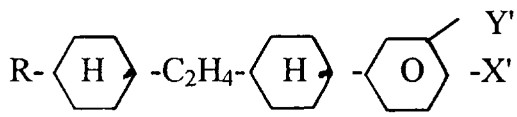 IV

worin die einzelnen Reste die folgenden Bedeutungen haben:

R Alkyl, Oxaalkyl, Fluoralkyl oder Alkenyl mit bis zu 7 C-Atomen,
X' F, Cl, $CF_3$ oder $OCF_3$,
Y' H oder F.

**3.** Medium nach Anspruch 1 oder 2, dadurch gekennzeichnet, daß es zusätzlich eine oder mehrere Verbindungen ausgewählt aus der Gruppe bestehend aus den allgemeinen Formeln V bis VIII enthält:

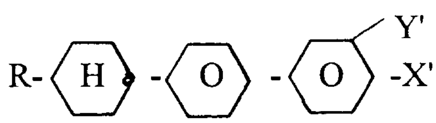 V

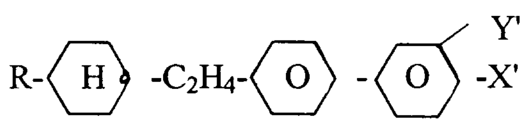 VI

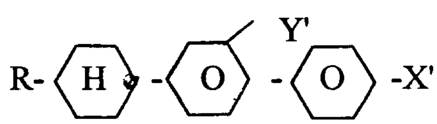 VII

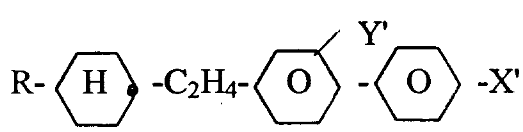 VIII

worin R, X' und Y' jeweils unabhängig voneinander eine der in Anspruch 2 angegebene Bedeutung haben.

4. Medium nach Anspruch 2, dadurch gekennzeichnet, daß der Anteil an Verbindungen der Formeln II bis IV zusammen im Gesamtgemisch mindestens 50 Gew.-% beträgt.

5. Medium nach einem derAnsprüche 1 bis 4, dadurch gekennzeichnet, daß es keine Verbindungen mit terminalem Nitril enthält.

6. Medium nach einem der Ansprüche 1 bis 5, dadurch gekennzeichnet, daß es eine oder mehrere Verbindungen der Formeln Iae bis Iam enthält.

7. Verbindungen der Formeln Iae bis Iam.

8. Verbindungen der Formel I'

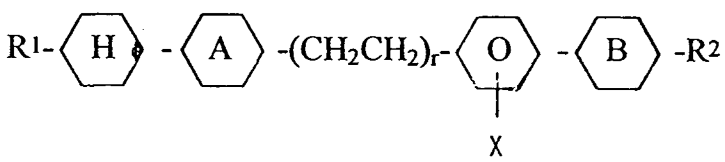

I'

worin

| | |
|---|---|
| $R^1$ und $R^2$ | jeweils unabhängig voneinander Alkyl mit bis zu 9 C-Atomen, worin auch eine $CH_2$-Gruppe durch O ersetzt sein kann, |
| Ring A | ist trans-1,4-Cyclohexylen, |
| Ring B | ist trans-1,4-Cyclohexylen oder |

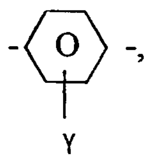

| | |
|---|---|
| r | ist 0 oder 1, und |
| X und Y | jeweils unabhängig voneinandder H oder F in einer oder mehreren Lateralpossitionen bedeuten, |

mit der Maßgabe, daß mindestens einer der im Molekül der Formel I' vorhandenen Reste X oder Y Fluor bedeutet.

9. Verbindungen der Formel Ib

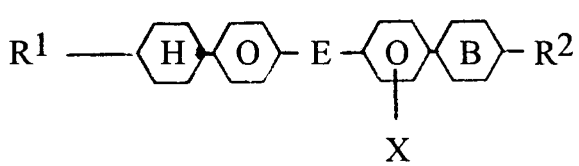

Ib

worin

| | |
|---|---|
| E | eine Einfachbindung oder $-CH_2CH_2-$, |
| $R^1$ und $R^2$ | jeweils unabhängig voneinander Alkyl mit bis zu 9 C-Atomen, worin auch eine $CH_2$-Gruppe durch O ersetzt sein kann, |
| Ring B | |

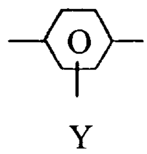

,

und

X und Y jeweils unabhängig voneinander H oder F in einer oder mehreren Lateralpositionen bedeuten,

mit der Maßgabe, daß mindestens einer der im Molekül der Formel Ib vorhandenen Reste X oder Y Fluor bedeutet.

**10.** Verbindungen nach Anspruch 8 oder 9, gekennzeichnet durch die Teilformeln I'a bis I'f:

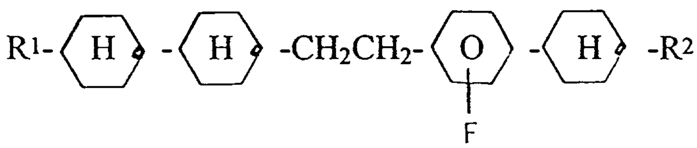

I'a

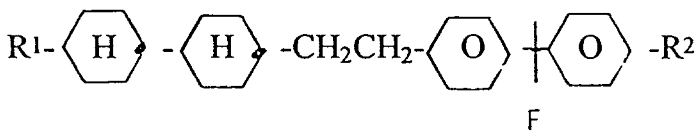

I'b

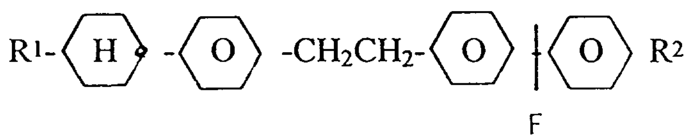

I'c

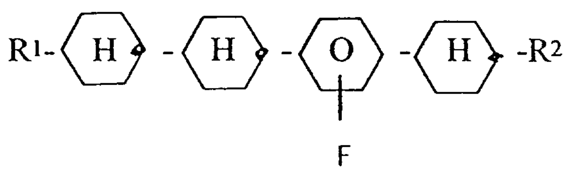

I'd

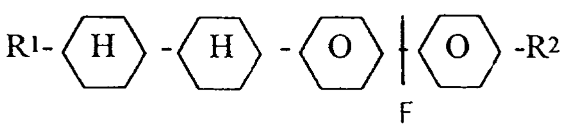

I'e

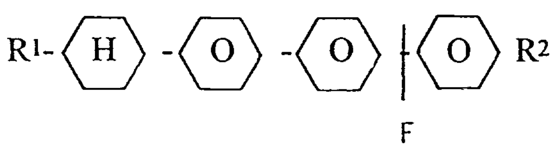

I'f

**11.** Verwendung des flüssigkristallinen Medium nach Anspruch 1 für elektrooptische Zwecke.

**12.** Elektrooptische Flüssigkristallanzeige enthaltend ein flüssigkristallines Medium nach Anspruch 1.

**13.** Anzeige nach Anspruch 12 mit

- zwei planparallelen Trägerplatten, die mit einer Umrandung eine Zelle bilden und
- integrierten nicht-linearen Elementen zur Schaltung einzelner Bildpunkte aufden Trägerplatten.

## Claims

**1.** Liquid-crystalline medium having high specific resistance, based on a mixture of polar compounds having a dielectric anisotropy of greater than +1.5, characterized in that it contains one or more

compounds selected from the group of compounds of the formulae Iae to Iam, Ib and Ic

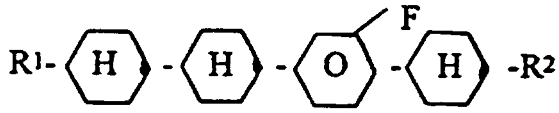

Iae

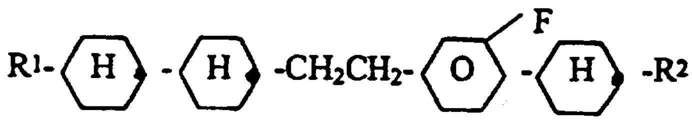

Iaf

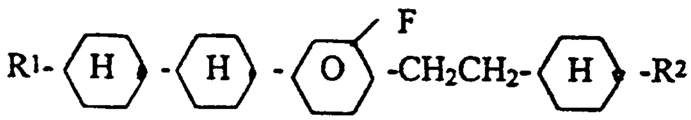

Iag

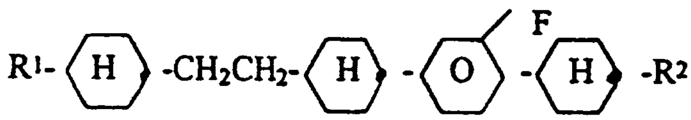

Iah

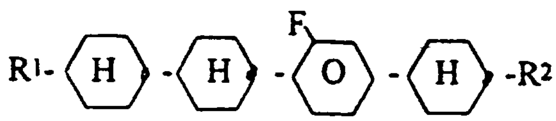

Iaj

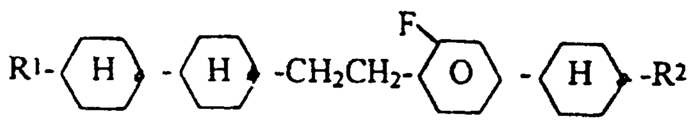

Iak

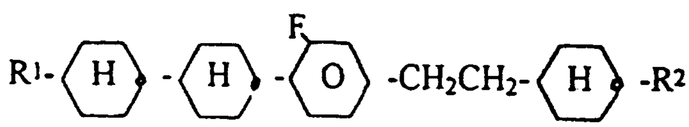

Ial

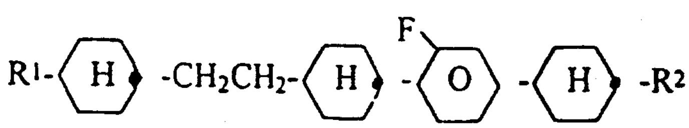

Iam

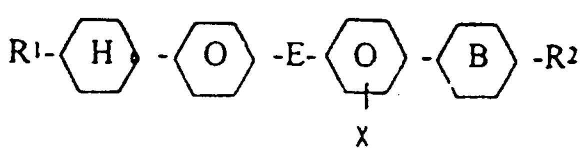

Ib

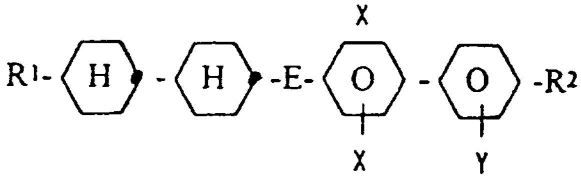

Ic

in which
the radicals E are each a single bond, or one of the radicals E is alternatively $-CH_2CH_2-$,
ring B is

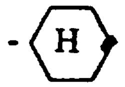 or 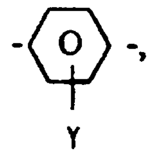,

$R^1$ and $R^2$ are each, independently of one another, n-alkyl, in which, in addition, one $CH_2$ group may be replaced by -O-, -CHHal-, -$CHal_2$- or -CH=CH-, and X and Y, independently, are H or F, with the proviso that at least one of the radicals X and Y present in the molecule of the formula Ib and Ic is F.

**2.** Medium according to Claim 1, characterized in that it additionally contains one or more compounds selected from the group comprising the general formulae II, III and IV:

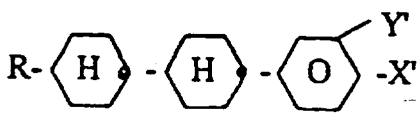 II

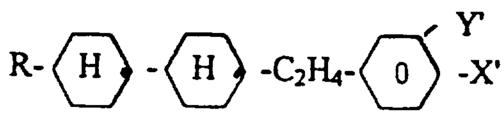 III

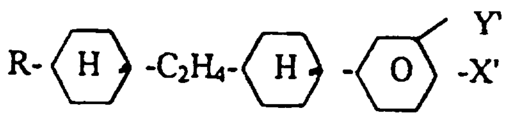 IV

in which the individual radicals have the following meanings:

R is alkyl, oxaalkyl, fluoroalkyl or alkenyl having up to 7 carbon atoms,
X' is F, Cl, $CF_3$ or $OCF_3$, and
Y' is H or F.

**3.** Medium according to Claim 1 or 2, characterized in that it additionally contains one or more compounds selected from the group comprising the general formulae V to VIII:

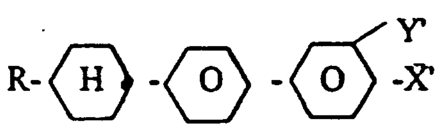 V

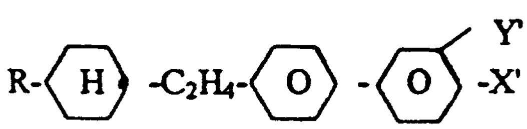 VI

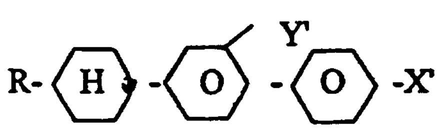 VII

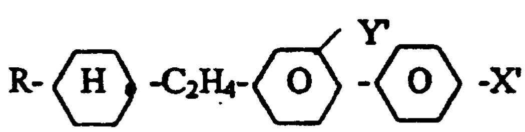 VIII

in which R, X' and Y' each, independently of one another, have one of the meaning [sic] given in Claim 2.

**4.** Medium according to Claim 2, characterized in that the proportion of compounds of the formulae II to IV together is at least 50% by weight in the total mixture.

**5.** Medium according to one of Claims 1 to 4, characterized in that it contains no compounds containing terminal nitrile.

**6.** Medium according to one of Claims 1 to 5, characterized in that it contains one or more compounds of the formulae Iae to Iam.

**7.** Compounds of the formulae Iae to Iam.

**8.** Compounds of the formula I'

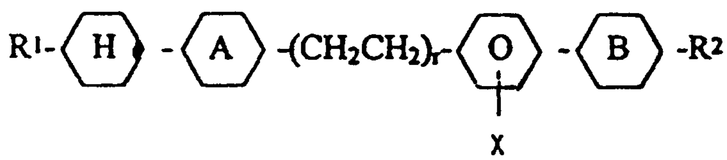

I'

in which

R¹ and R² are each, independently of one another, alkyl having up to 9 carbon atoms in which, in addition, one $CH_2$ group may be replaced by O,
ring A is trans-1,4-cyclohexylene,
ring B is trans-1,4-cyclohexylene or

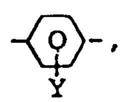

r is 0 or 1, and
X and Y are each, independently of one another, H or F in one or more lateral positions,
with the proviso that at least one of the radicals X and Y present in the molecule of the formula I' is fluorine.

**9.** Compounds of the formula Ib

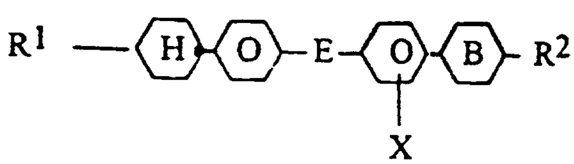

Ib

in which

E is a single bond or $-CH_2CH_2-$,
R¹ and R² are each, independently of one another, alkyl having up to 9 carbon atoms in which, in addition, one $CH_2$ group may be replaced by O,
ring B is

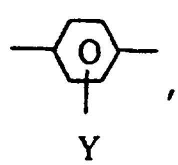

and

X and Y are each, independently of one another, H or F in one or more lateral positions,

with the proviso that at least one of the radicals X and Y present in the molecule of the formula Ib is fluorine.

**10.** Compounds according to Claim 8 or 9, characterized by the sub-formulae I'a to I'f:

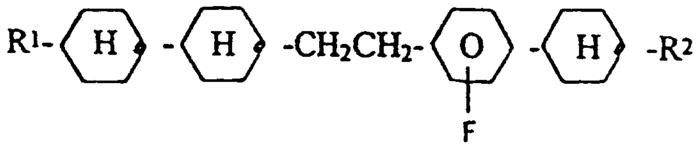

I'a

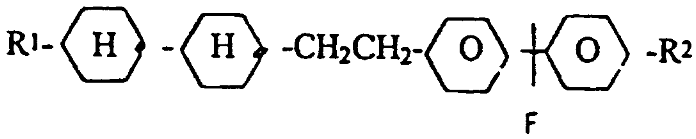

I'b

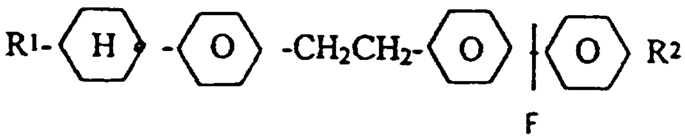

I'c

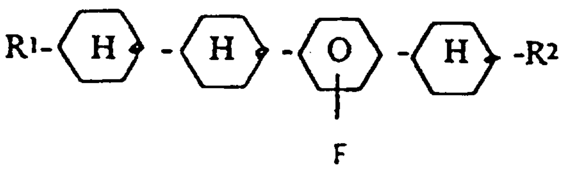

I'd

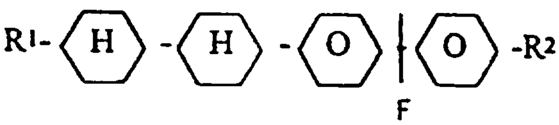

I'e

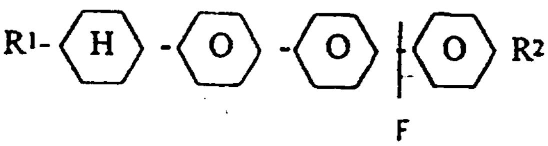

I'f

**11.** Use of the liquid-crystalline medium according to Claim 1 for electrooptical purposes.

**12.** Electrooptical liquid-crystal display containing a liquid-crystalline medium according to Claim 1.

**13.** Display according to Claim 12, having
- two plane-parallel outer plates which, together with a frame, form a cell, and
- integrated nonlinear elements for switching individual image points on the outer plates.

**Revendications**

**1.** Milieu à cristaux liquides présentant une résistance spécifique élevée, à base d'un mélange de composés polaires ayant une anisotropie diélectrique supérieure à + 1,5, caractérisé en ce qu'il contient un ou plusieurs composés choisis dans le groupe des composés de formules Iae à Iam, Ib et Ic

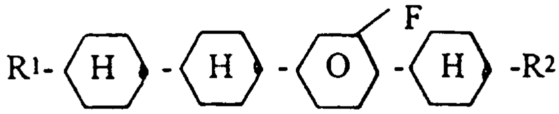
Iae

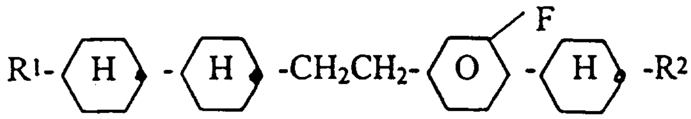
Iaf

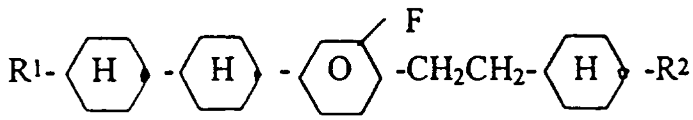
Iag

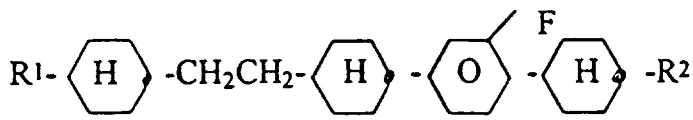
Iah

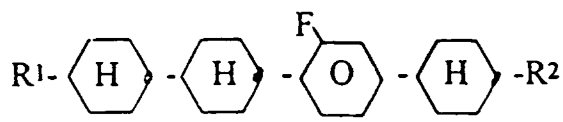
Iaj

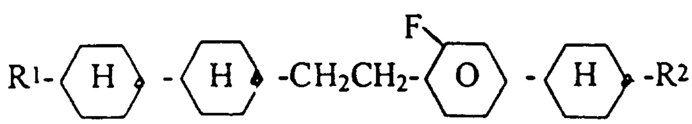
Iak

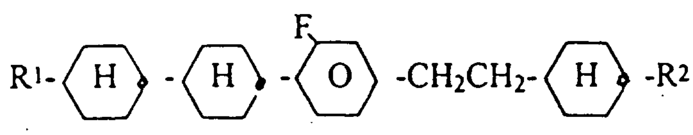
Ial

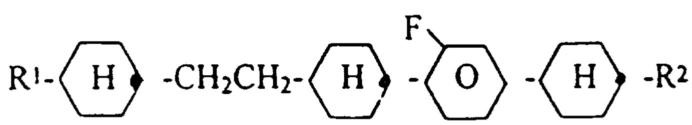
Iam

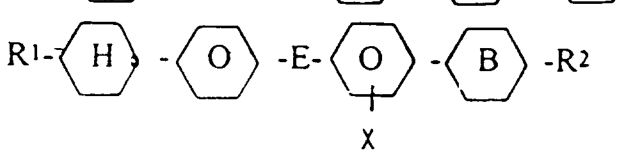
Ib

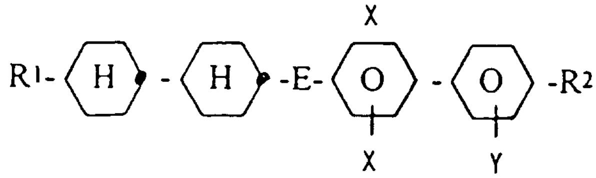
Ic

où
les restes E représentent une liaison simple ou l'un des restes E représente également $-CH_2-CH_2-$,
le cycle B représente

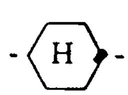
ou
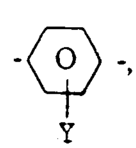
,

$R^1$ et $R^2$ représentent, indépendamment l'un de l'autre, un n-alkyle, un groupe $CH_2$ pouvant êtyre remplacé par -O-, -CHHal-, $-CHal_2-$ou -CH = CH-, et X et Y représentent, indépendamment H ou F, sous

réserve qu'au moins l'un des restes X et Y présents dans la molécule de formules Ib et Ic représente F.

2. Milieu selon la revendication 1, caractérisé en ce qu'il contient en plus un ou plusieurs composés choisis dans le groupe constitué par les composés de formules générales II, III ou IV ;

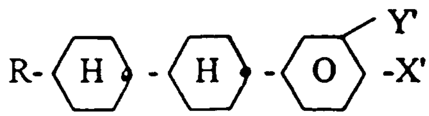
II

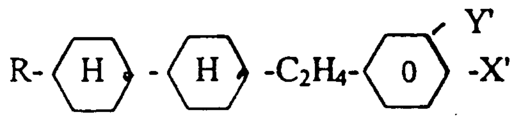
III

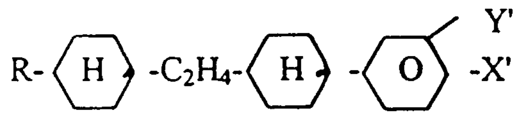
IV

où les restes individuels ont les significations suivantes :
R représente un alkyle, un oxaalkyle, un fluoroalkyle ou un alcényle ayant jusqu'à 7 atomes de C,
X' représente F, Cl, $CF_3$ ou $OCF_3$,
Y' représente H ou F.

3. Milieu selon la revendication 1 ou 2, caractérisé en ce qu'il contient en plus un ou plusieurs composés choisis dans le groupe constitué par les composés de formules générales V à VIII

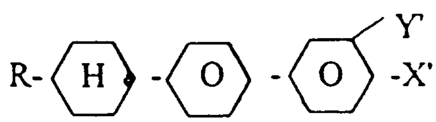
V

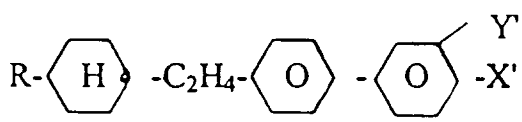
VI

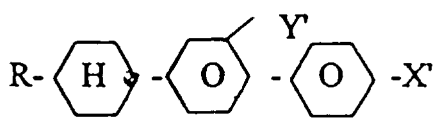
VII

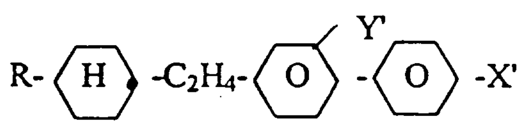
VIII

où R, X' et Y'ont, indépendamment les uns des autres, l'une des significations données dans la revendication 2.

4. Milieu selon la revendication 2, caractérisé en ce que la proportion des composés de formules II à IV dans le mélange total est d'au moins 50% en poids.

5. Milieu selon l'une des revendications 1 à 4, caractérisé en ce qu'il ne contient pas de composés ayant un nitrile terminal.

6. Milieu selon l'une des revendications 1 à 5, caractérisé en ce qu'il contient un ou plusieurs composés de formules Iae à Iam.

7. Les composés de formules Iae à Iam.

8. Composés de formule I'

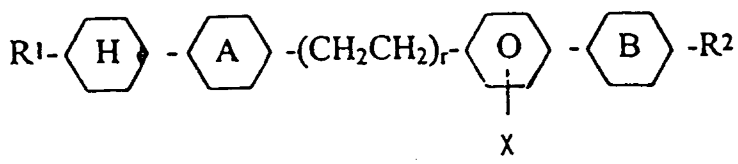

I'

où
$R^1$ et $R^2$ représentent, indépendamment l'un de l'autre, un alkyle ayant jusqu'à 9 atomes de C, un groupe $CH_2$ pouvant être remplacé par O,
le cycle A est le trans-1,4-cyclohexylène,
le cycle B est le trans-1,4-cyclohexylène ou

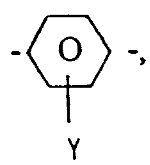

r est 0 ou 1 et
X et Y représentent, indépendamment l'un de l'autre, H ou F dans une ou plusieurs positions latérales, sous réserve qu'au moins l'un des restes X ou Y présents dans la molécule de formule I' représente le fluor.

9. Composés de formule Ib

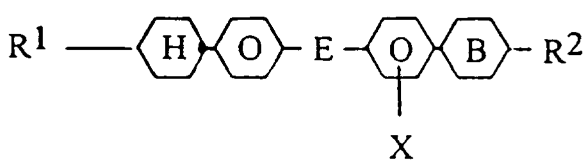

Ib

où
E représente une liaison simple ou $-CH_2CH_2-$,
$R^1$ et $R^2$ représentent, indépendamment l'un de l'autre, un alkyle ayant jusqu'à 9 atomes de C, un groupe $CH_2$ pouvant être remplacé par O,
le cycle B représente

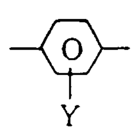

,

et
X et Y représentent, indépendamment l'un de l'autre, H ou F dans une ou plusieurs positions latérales, sous réserve qu'au moins l'un des restes X ou Y présents dans la molécule de formule Ib représente le fluor.

**10.** Composés selon la revendication 8 ou 9, caractérisés par les formules partielles I'a à I'f :

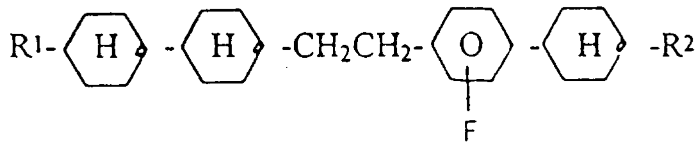

I'a

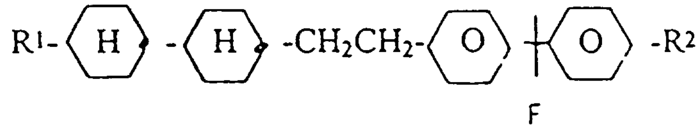

I'b

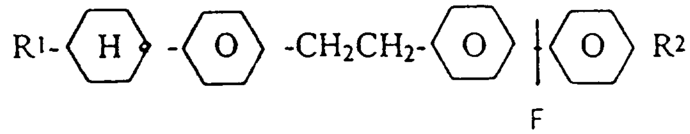

I'c

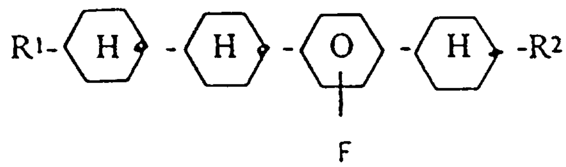

I'd

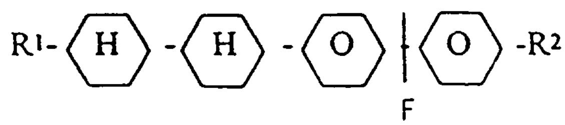

I'e

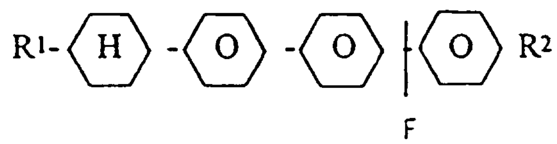

I'f

**11.** Utilisation du milieu à cristaux liquides selon la revendication 1 à des fins électro-optiques.

**12.** Dispositif d'affichage à cristaux liquides électro-optique contenant un milieu à cristaux liquides selon la revendication 1.

**13.** Dispositif d'affichage selon la revendication 12 comportant :
- deux plaques supports à faces planes et parallèles qui avec un bord forme une cellule et
- des éléments non-linéaires intégrés pour le couplage des points d'image sur les plaques supports.